# EUROPÄISCHE PATENTSCHRIFT

(11) **EP 1 814 656 B1**
(45) Veröffentlichungstag und Bekanntmachung des Hinweises auf die Patenterteilung: **05.01.2011**
(21) Anmeldenummer: 05814266.2
(22) Anmeldetag: 25.11.2005
(51) Int. Cl.: B01J 19/00, C40B 50/14, C40B 40/06

(54) **VERFAHREN ZUR ORTSSPEZIFISCHEN SYNTHESE VON BIOPOLYMEREN AUF FESTEN TRÄGERN**
METHOD FOR SPECIFICALLY LOCATED SYNTHESIS OF BIOPOLYMERS ON SOLID CARRIERS
PROCEDES DE SYNTHESE REGIOSPECIFIQUE DE BIOPOLYMERES SUR DES SUPPORTS SOLIDES

(30) Priorität: 25.11.2004 DE 102004056980
(43) Veröffentlichungstag der Anmeldung: 08.08.2007
(60) Teilanmeldung: 10179683.7
(73) Patentinhaber: Clondiag GmbH, 07749 Jena (DE)
(72) Erfinder: ELLINGER, Thomas, 07743 Jena (DE); ERMANTRAUT, Eugen, 07745 Jena (DE); HOLZHEY, Nancy, 07743 Jena (DE); PLENZ, Frank, 07743 Jena (DE); SCHULZ, Torsten, 07743 Jena (DE); TUCHSCHEERER, Jens, 07743 Jena (DE); WEICHERDING, Daniel, 81671 München (DE)
(74) Vertreter: Huenges, Martin
(86) Internationale Anmeldenummer: PCT/EP2005/012648
(87) Internationale Veröffentlichungsnummer: WO 2006/056466

(56) Entgegenhaltungen:
- WO-A-93/09668
- WO-A-97/33737
- WO-A-98/36827
- STAWINSKI ET AL.: NUCLEIC ACIDS RESEARCH, vol. 4, no. 2, 1977, pages 353-371,
- MCCOLLUM ET AL.: TETRAHEDRON LETTERS, vol. 32, no. 33, 1991, pages 4069-4072,
- "ÄKTÄ oligopilot plus User Manual 18-1142-20" 2006, GE Healthcare
- "Expedite(TM) 8900 Nucleic Acid Synthesis System User's Guide" 1997, Perseptive Biosystems
- "ÄKTÄ oligopilot Making Your First Run" 2000,
- STAWINSKI ET AL.: NUCLEIC ACIDS RESEARCH, Bd. 4, Nr. 2, 1977, Seiten 353-371,
- MCCOLLUM ET AL: TETRAHEDRON LETTERS, Bd. 32, Nr. 33, 1991, Seiten 4069-4072,
- "ÄKTA oligopilot plus User Manual 18-1142-20" 2006, GE HEALTHCARE
- "Expedite(TM) 8900 Nucleic Acid Synthesis System User's Guide" 1997, PERSEPTIVE BIOSYSTEMS
- "ÄKTÄ oligopilot Making Your First Run" StartDateMarker 2000, EndDateMarker

## Beschreibung

Die Erfindung betrifft Verfahren zur ortsspezifischen Synthese von Biopolymeren wie Nukleinsäuren oder Peptiden mit definierter Sequenz auf vorbestimmten Bereichen eines festen Trägers. Ferner betrifft die Erfindung Verfahren zur ortsspezifischen Synthese von Biopolymeren und deren jeweiligen Derivaten auf festen Trägem, wobei die örtliche Diskriminierung der Synthese durch Verwendung von Masken erfolgt, die wässrige Aktivierungsreagenzien für die Abspaltung von Schutzgruppen zu vorbestimmten Bereichen auf dem Träger führen. Die erfindungsgemäßen Verfahren sind insbesondere zur Herstellung von Mikroarrays mit auf vorbestimmten Bereichen immobilisierten molekularen Sonden in Form von Biopolymeren geeignet.

Es sind zahlreiche Verfahren zur Synthese von Biomolekülen auf festen Trägem in Form von Mikroarrays bekannt.

So sind u.a. in EP 0 619 321, EP 0 946 286 und US 5,143,854 Verfahren zur Herstellung von Mikroarrays beschrieben, bei denen vorbestimmte Bereiche des Trägers durch Belichtung aktiviert werden. Für die Durchführung dieser auch als VLSIPS (*very large scale immobilized polymer synthesis*) bezeichneten Verfahren sind teure photolabile Schutzgruppen bzw. photoaktivierbare Katalysatoren sowie ein hoher apparativer Aufwand erforderlich.

Verfahren zur Herstellung von Arrays unter Verwendung herkömmlicher Synthesechemie sind in den folgenden Druckschriften beschrieben:

In US 5,384,261 ist ein Verfahren zur Synthese von Peptiden beschrieben, bei dem harte Kanalmasken eingesetzt werden, die auf den Träger aufgesetzt werden, um bestimmte für die Synthese vorgesehene Bereiche voneinander abzutrennen. Um eine dichte Abtrennung zwischen diesen Bereichen zu gewährleisten, werden die Masken auf die Oberfläche des Trägers geschraubt. Es wird jeweils ein kompletter Synthesezyklus pro Kanal durchgeführt.

U. Maskos und E.M. Southem beschreiben in Nucleic Acid Res. 1992, 20, 1679-1684 ein Verfahren zur Herstellung eines Biopolymer-Arrays unter Verwendung flexibler Masken. Als Maskenmaterial werden Silikonschläuche eingesetzt, die gegen die Oberfläche des Trägers gedrückt werden. Im Anschluss daran werden Synthesezyklen zum Aufbau der Biomoleküle auf dem Array durchgeführt. Die dort verwendeten Silikonschläuche erlauben jedoch keine Miniaturisierung.

In DE 195 43 232 und P.F. Xiao et al., Nanotechnology 2002, 13, 756-762 ist das ortsspezifische Ablegen von aktivierten Phosphoramiditnucleosiden auf der Oberfläche eines Trägers mittels eines Polydimethylsiloxan-Stempels beschrieben. Ein derartiges Verfahren ist jedoch insbesondere für eine effiziente Synthese auf rauen oder porösen Polymeroberflächen nicht geeignet. Ferner können bei diesem Verfahren während des Spülens der Reagenzien nach Abschluss eines Druckvorgangs Bereiche der Trägeroberfläche kontaminiert werden, die nicht durch den Stempel kontaktiert wurden.

In US 5,512,131 ist ebenfalls die Derivatisierung von Oberflächen unter Verwendung von Polydimethylsiloxan-Stempeln beschrieben.

Der Einsatz von Stempeln zur Immobilisierung von Testsubstanzen sowie die nachfolgende Prozessierung von serologischen Tests ist u.a. auch beschrieben in E. Delamarche et al., Science 1997, 276, 779-781; E. Delamarche et al., J. Am. Chem. Soc. 1998, 120, 3, 500-508 und A. Bernard et al., Langmuir 1998, 14, 9, 2225-2229.

Die internationale Patentanmeldung WO 97/33737 beschreibt die positionsgenaue Deposition von chemischen oder biochemischen Substanzen mittels Kapillarkräften unter Verwendung eines Gegenstands mit einer konturierten Oberfläche.

In WO 98/36827 ist ein Verfahren zur Erzeugung von Substanzbibliotheken auf einem festen Träger unter Verwendung von Masken beschrieben. Als Maske kann insbesondere eine mikrostrukturierte Silikonmembran eingesetzt werden. Die Maske dient zur Abdeckung definierter Bereiche eines Trägers. Die Öffnungen in der Membran bzw. Maske gestatten die Durchführung von Synthese- bzw. Immobilisierungsschritten auf den nicht abgedeckten Bereichen des Trägers.

In US 5,658,734 ist ein Verfahren zur Synthese einer Vielzahl von chemischen Verbindungen unterschiedlicher Struktur auf einem Träger offenbart, bei dem eine Photoresistschicht zur Abdeckung bestimmter Bereiche auf dem mit labilen Schutzgruppen versehenen Träger genutzt werden. Die Photoresistschicht wird belichtet und entwickelt. Anschließend werden die labilen Schutzgruppen von den nicht von der Photoresistschicht bedeckten Bereichen entfernt und ein herkömmlicher Synthesezyklus zur Erzeugung von Oligomeren aus Aminosäuren, Nukleotiden u. dgl. durchgeführt. Ein ähnliches Verfahren zur Immobilisierung von Oligonukleotiden ist auch in US 5,688,642 beschrieben.

Derartige Photoresist-basierte Verfahren liefern jedoch nur mangelhafte Ausbeuten und sind nur in geringem Maß reproduzierbar. So steht die Notwendigkeit, den Photoresist so dichtend wie möglich auf dem Träger anzubringen, dem Bestreben entgegen, den Photoresist nach Abschluss des Synthesezyklus auf einfache Weise ablösen zu können. Ein weiteres Problem besteht darin, dass der auf der Oberfläche aufgebrachte Photoresist bei der Belichtung und Entwicklung chemische Reaktionen durchläuft, die die bereits auf der Oberfläche befindlichen Synthese-Intermediate beeinträchtigen können.

In US 5,599,695 ist ein Verfahren beschrieben, bei dem in der Drucktechnik übliche Verfahren zur Herstellung von Molekülbibliotheken genutzt werden. Dabei wird selektiv eine Grenzschicht in flüssiger Form oder als Dampf auf die Oberfläche eines Trägers aufgebracht und so ein Muster für die selektive Anbringung von Molekülen auf dem Träger erzeugt. Dabei kann z.B. Silikonöl als Grenzschicht dienen. Die Abspaltung von Schutzgruppen erfolgt mittels gasförmiger Entschützungsreagenzien. Eine derartige Vorgehensweise weist den Nachteil auf, dass auch das flüssige Grenzschichtmaterial von gasförmigem Entschützungsreagenz durchdrungen werden kann. Ferner ist die Präzision des Verfahrens durch die Möglichkeit des Verwischens bzw. Verfließens der eingesetzten Reagenzien begrenzt.

Es besteht folglich ein Bedarf an Verfahren für die ortsspezifische Synthese von Biopolymeren unterschiedlicher Sequenzen auf einem festen Träger, die kostengünstig sind, den Einsatz von für die Synthese von Biopolymeren üblichen Reagenzien erlauben und eine effiziente und fehlerfreie Synthese der Biopolymere gewährleisten. Insbesondere besteht ein Bedarf an Verfahren für eine ortsspezifische Synthese von Biopolymeren mit einer Ortsauflösung im µm-Maßstab.

Aufgabe der vorliegenden Erfindung ist es, die vorstehend genannten Probleme des Standes der Technik zu überwinden.

Insbesondere ist es eine Aufgabe der vorliegenden Erfindung, ein Verfahren zur ortsspezifischen Synthese einer Vielzahl von Biopolymer-Spezies mit jeweils einer für einen vorbestimmten Bereich definierten Sequenz, z.B. einer kombinatorischen Biopolymerbibliothek, bereitzustellen, bei dem im Wesentlichen für die Festphasensynthese von Biopolymeren übliche Reagenzien eingesetzt werden können.

Ferner ist eine Aufgabe der vorliegenden Erfindung, ein kostengünstiges und einfaches Verfahren zur ortsspezifischen Synthese einer Vielzahl von unterschiedlichen Biopolymeren mit definierter Sequenz bereitzustellen.

Des Weiteren ist es eine Aufgabe der vorliegenden Erfindung, ein Verfahren bereitzustellen, mit dem Biopolymerbibliotheken in Form von Mikroarrays auf eine Vielzahl von Trägermaterialien aufgebracht werden kann.

Eine besondere Aufgabe besteht in der Bereitstellung eines Verfahrens, in dem Masken zur Gewährleistung der ortsspezifischen Synthese der Biopolymere eingesetzt werden können, die auf einfache Weise positionsgenau auf dem Trägermaterial eines Mikroarrays angebracht werden können.

Eine weitere Aufgabe der vorliegenden Erfindung besteht in der Bereitstellung eines Verfahrens zur ortsspezifischen Synthese einer Vielzahl von Biopolymeren mit jeweils definierter Sequenz, bei dem Masken eingesetzt werden, die von der Trägeroberfläche entfernt werden können, ohne bereits auf der Trägeroberfläche angebrachte Monomerbausteine zu beeinträchtigen.

Schließlich ist es eine Aufgabe der vorliegenden Erfindung, ein Verfahren zur Synthese von einer Vielzahl von Biopolymeren mit definierter Sequenz bereitzustellen, bei dem Reagenzien verwendet werden, die mit einem Maskenmaterial kompatibel sind, welches die vorstehenden Anforderungen erfüllt und eine ortsspezifische Synthese gewährleistet.

Diese und weitere Aufgaben der vorliegenden Erfindung werden durch die Bereitstellung der in den Patentansprüchen gekennzeichneten Ausführungsformen gelöst.

Insbesondere wird ein Verfahren zur ortsspezifischen Synthese von Biopolymeren einer definierten Sequenz auf einem festen Träger durch schrittweise Kupplung von Monomer- und/oder Oligomerbausteinen beschrieben, wobei jeweils vor einem Kupplungsschritt temporäre Schutzgruppen für reaktive Gruppen auf dem Träger und/oder an Intermediaten der zu synthetisierenden Biopolymere durch Zugabe einer wässrigen Lösung eines Aktivierungsreagenzes entfernt werden.

Es wird ein Verfahren zur ortsspezifischen Synthese von Biopolymeren einer definierten Sequenz auf vorbestimmten Bereichen eines festen Trägers durch schrittweise Kupplung von Monomer- und/oder Oligomerbausteinen beschrieben, wobei jeweils vor einem Kupplungsschritt auf mindestens einem vorbestimmten Bereich temporäre Schutzgruppen für reaktive Gruppen auf dem Träger und/oder an Intermediaten der zu synthetisierenden Biopolymere durch Zugabe einer wässrigen Lösung eines Aktivierungsreagenzes entfernt werden.

Es wird ein Verfahren zur ortsspezifischen Synthese von Biopolymeren einer definierten Sequenz auf vorbestimmten Bereichen eines festen Trägers beschreiben das folgende Schritte umfasst:
a) Anordnen einer Maske auf dem Träger, wobei auf dem Träger für die Kupplung von Monomer- und/oder Oligomerbausteinen des zu synthetisierenden Biopolymers zur Verfügung stehende reaktive Gruppen mit Schutzgruppen versehen sind;
b) Aktivieren von reaktiven Gruppen durch Entfernen von temporären Schutzgruppen an den durch die Maske vorgegebenen Bereichen mittels Zugabe eines Aktivierungsreagenzes;
c) Kupplung eines Monomer- und/oder Oligomerbausteins an in Schritt b) aktivierte reaktive Gruppen; und
d) Wiederholen der Schritte a) bis c), bis die gewünschten Biopolymere auf vorbestimmten Bereichen des Trägers synthetisiert sind.

Ein Gegenstand der vorliegenden Erfindung ist ein Verfahren zur ortsspezifischen Synthese von Biopolymeren einer definierten Sequenz auf vorbestimmten Bereichen eines festen Trägers, wobei auf dem Träger reaktive und mit temporären Schutzgruppen versehene Gruppen für die Kupplung von Monomer- und/oder Oligomerbausteinen der zu Synthetisierenden Biopolymere vorliegen, umfassend die folgenden Schritte :
a) Anordnen einer Maske auf dem Träger,
b) Aktivieren der reaktiven Gruppen durch Entfernen der temporären Schutzgruppen an den durch die Maske vorgegebenen Bereichen mittels Zugabe eines Aktivierungsreagenzes in wässriger Lösung;
c) Kupplung eines Monomer- und/oder Oligomerbausteins an die in Schritt b) aktivierten reaktiven Gruppen; und
d) Wiederholen der Schritte a) bis c), bis die gewünschten Biopolymere auf vorbestimmten Bereichen des Trägers synthetisiert sind.

Ein weiterer Gegenstand der vorliegenden Erfindung ist ein Verfahren zur ortsspezifischen Synthese von Biopolymeren einer definierten Sequenz auf vorbestimmten Bereichen eines festen Trägers, das die folgenden Schritte umfasst:
a) Anordnen einer Elastomer-Maske auf dem Träger, wobei auf dem Träger für die Kupplung von Monomer- und/oder Oligomerbausteinen des zu synthetisierenden Biopolymers zur Verfügung stehende reaktive Gruppen mit Schutzgruppen versehen sind;
b) Aktivieren von reaktiven Gruppen durch Entfernen von temporären Schutzgruppen an den durch die Maske vorgegebenen Bereichen mittels Zugabe eines Aktivierungsreagenzes in wässriger Lösung;
c) Kupplung eines Monomer- und/oder Oligomerbausteins an die Schritt b) aktivierten reaktiven Gruppen; und
d) Wiederholen der Schritte a) bis c), bis die gewünschten Biopolymere auf vorbestimmten Bereichen des Trägers synthetisiert sind.

Es wird ein Mikroarray mit auf vorbestimmten Bereichen immobilisierten Biopolymer-Sonden beschrieben, bei dem der prozentuale Anteil P an Biopolymeren, die die gewünschte Zahl M an Monomeren aufweisen, durch die Formel P = S^{M} gekennzeichnet ist,
wobei S die durchschnittliche Schrittausbeute für die Kupplung eines Monomerund/oder Oligomerbausteins ist, und wobei die Dichte an vorbestimmten Bereichen beispielsweise mindestens 1.500 Spots pro cm² beträgt und die durchschnittliche Schrittausbeute S mehr als 94%, z.B. mindestens 95%, vorzugsweise mindestens 97%, besonders bevorzugt mindestens 98% und am meisten bevorzugt mindestens 98,6% beträgt.

Es wird die Verwendung die Verwendung der hier beschriebenen Verfahren zur Herstellung eines Mikroarrays mit auf vorbestimmten Bereichen eines Trägers immobilisierten Biopolymer-Sonden beschrieben.

Schließlich wird die Verwendung von Entschützungsreagenzien in wässriger Lösung zur Abspaltung temporärer Schutzgruppen bei der Synthese von Biopolymeren beschrieben.

Bislang werden bei der Durchführung von Aktivierungs- bzw. Entschützungsreaktionen in Biopolymersynthesen nicht-wässrige, aprotische Lösungsmittel verwendet, da diese nicht zur Schrumpfung von gequollenen, polymeren Trägermaterialien, wie sie z.B. bei der Peptidsynthese verwendet werden, führen und zum anderen bei Verwendung von porösen bzw. rauen Trägem schnell trocknen. Sowohl bei der Polynukleotid- als auch bei der Peptidsynthese werden die Kupplungsschritte bislang unter Wasserausschluss durchgeführt. Bei der Synthese von Nukleinsäuren wurde dies u.a. dadurch begründet, dass Wasser als stärkeres Nukleophil die bei der Nukleinsäuresynthese eingesetzten aktivierten Amidite hydrolisieren würde. Bei der Synthese von Peptiden wird die Hydrolyse der eingesetzten Aminosäureaktivester unter Wasserausschluss verlangsamt. Allgemein wurde bislang bei der Durchführung von Kondensationsreaktionen wie Polynukleotid- oder Peptidsynthesen, die unter Abspaltung von Wasser verlaufen, angenommen, dass eine Vermeidung von Wasser als Edukt zu bevorzugen ist.

Überraschenderweise wurde nun gefunden, dass die erfindungsgemäßen Verfahren zur Synthese von Biopolymeren auf festen Trägern unter Verwendung wässriger Aktivierungs- bzw. Entschützungsreagenzien durchgeführt werden können, ohne dass dies die Syntheseeffizienz wesentlich beeinträchtigt.

Bei den erfindungsgemäßen Verfahren werden auf einem vorbestimmten Bereich eines Trägers im Wesentlichen nur eine Spezies an Biopolymeren, d.h. Biopolymere mit einer identischen Sequenz von Monomeren und einer identischen Sequenzlänge erzeugt. Biopolymere auf unterschiedlichen vorbestimmten Bereichen können sich in ihrer Sequenz von Monomeren unterscheiden. Die Anzahl an unterschiedlichen Biopolymer-Spezies auf dem Träger kann z.B. durch geeignete Auswahl und Anordnung von Masken beliebig eingestellt werden und ist lediglich durch die Anzahl an vorbestimmten Bereichen limitiert. Im Extremfall entspricht die Anzahl der vorbestimmten Bereiche auf dem Träger nach Abschluss des erfindungsgemäßen Verfahrens der Anzahl an unterschiedlichen Biopolymer-Spezies auf dem Träger.

Erfolgt die örtliche Diskriminierung der Synthese durch Verwendung von Masken, ist Voraussetzung für die Gewährleistung eines hohen Reinheitsgrads einer auf einem vorbestimmten Bereich des Trägers synthetisierten Biopolymer-Spezies, dass die Maske derart dicht auf dem Träger angebracht werden kann, dass nur an den durch die Maske vorgegebenen, d.h. nicht durch die Maske abgedeckten Bereichen Schutzgruppen entfernt werden. Die Verwendung von wässrigen Aktivierungs- bzw. Entschützungsreagenzien weist den wesentlichen Vorteil auf, dass dies den Einsatz von Masken aus Elastomeren ermöglicht und so eine aus der Verwendung organischer Lösungsmittel resultierende Veränderung der geometrischen Form bzw. ein Quellen eines derartigen Maskenmaterials vermieden wird. Ein derartiges Quellen einer aus Elastomeren bestehenden Maske würde zu einer Verringerung der Adhäsionskräfte zwischen Maske und Träger bis hin zum Ablösen der Maske von dem Träger führen und somit unter anderem in Kontaminationen in abgedeckten Bereichen des Trägers resultieren.

Die Verwendung von Masken aus Elastomeren ist vorteilhaft, da keine externe Kraft wie z.B. durch Schrauben oder Klammern erforderlich ist, um die Maske dichtend auf der Oberfläche des Trägers auszurichten. Die Maske wird somit vorzugsweise allein durch Adhäsion zwischen dem Träger- und Maskenmaterial dichtend auf der Trägeroberfläche angebracht. In der Regel wird die Maske dabei an auf der Trägeroberfläche angebrachten Markierungen ausgerichtet.

Die erfindungsgemäßen Verfahren können mit einer Vielzahl von Trägermaterialien und insbesondere mit allen herkömmlichen Trägermaterialien durchgeführt werden. Beispiele für geeignete Trägermaterialien sind Glas und Siliziumdioxid. Insbesondere sind solche Kombinationen aus Masken- und Trägermaterialien für die erfindungsgemäßen Verfahren geeignet, die eine ausreichende Adhäsion zwischen Träger und Maske derart gewährleisten, dass die Maske ohne Einwirkung einer externen Kraft dichtend auf dem Träger angeordnet werden kann.

Die erfindungsgemäßen Verfahren zur Synthese einer Vielzahl von Biopolymer-Spezies auf jeweils vorbestimmten Bereichen eines festen Trägers weisen ferner den Vorteil auf, dass im Wesentlichen die üblicherweise bei der Festphasensynthese von Biopolymeren verwendeten Reagenzien eingesetzt werden können. Die mit der UV-Belichtung verbundenen Nachteile der im Stand der Technik beschriebenen VLSIPS-Verfahren zur Herstellung von Mikroarrays können somit vermieden werden.

Die erfindungsgemäßen Verfahren ermöglichen ferner einen hohen Grad an Parallelisierbarkeit, so dass auf vorbestimmten Bereichen eines festen Trägers eine Vielzahl von Biopolymer-Spezies mit unterschiedlicher Sequenz parallel und ortsspezifisch synthetisiert werden können.

Zur Beschreibung der vorliegenden Erfindung werden u.a. folgende Definitionen verwendet:

Unter einer Sonde bzw. einem Sondenmolekül bzw. einer molekularen Sonde wird im Rahmen der vorliegenden Erfindung ein Molekül, insbesondere ein Biopolymer verstanden, das zum Nachweis anderer Moleküle durch ein bestimmtes, charakteristisches Bindungsverhalten bzw. eine bestimmte Reaktivität verwendet wird. Für die auf dem Träger insbesondere in Form eines Arrays angeordneten Sonden kommt jede Art von Molekülen in Frage, die sich an feste Oberflächen koppeln lassen und eine spezifische Affinität aufweisen. In einer bevorzugten Ausführungsform handelt es sich bei den Biopolymer-Sonden insbesondere um Biopolymere aus den Klassen der Peptide, Proteine, Antigene, Antikörper, Kohlenhydrate, Nukleinsäuren und/oder deren Analoga und/oder Mischpolymere der vorstehend genannten Biopolymere. Besonders bevorzugt sind die Sonden Nukleinsäuren und/oder Nukleinsäureanaloga.

Als Sonden werden insbesondere Nukleinsäuremoleküle definierter und bekannter Sequenz bezeichnet, die benutzt werden, um in Hybridisierungsverfahren Target-Moleküle, wie Nukleinsäuren oder an Nukleinsäuren bindende Vertreter anderer Substanzklassen, nachzuweisen. Als Nukleinsäuren können sowohl DNA- als auch RNA-Moleküle verwendet werden. Beispielsweise kann es sich bei den Nukleinsäurensonden bzw. Oligonukleotidsonden um Oligonukleotide mit einer Länge von 10 bis 100 Basen, vorzugsweise 15 bis 50 Basen und besonders bevorzugt von 20 bis 30 Basen Länge handeln. Typischerweise handelt es sich erfindungsgemäß bei den Sonden um einzelsträngige Nukleinsäuremoleküle oder Moleküle von Nukleinsäureanaloga, bevorzugt einzelsträngige DNA-Moleküle oder RNA-Moleküle, die mindestens über einen Sequenzbereich verfügen, der zu einem Sequenzbereich der Target-Moleküle komplementär ist. Je nach Nachweisverfahren und Anwendung können die Sonden bzw. Biopolymere auf einem festen Trägersubstrat, z.B. in Form eines Mikroarrays, immobilisiert sein. Darüber hinaus können sie je nach Nachweisverfahren markiert sein, so dass sie über eine im Stand der Technik übliche Nachweisreaktion nachgewiesen werden können.

Unter einem Target bzw. einem Targetmolekül wird im Rahmen der vorliegenden Erfindung das mit einer molekularen Sonde nachzuweisende Molekül verstanden. Bei einer bevorzugten Ausführungsform der vorliegenden Erfindung handelt es sich bei den zu detektierenden Targets um Nukleinsäuren. Ein erfindungsgemäß hergestelltes Mikroarray kann jedoch analog auch zum Nachweis von Peptid/Sonden-Wechselwirkungen, Protein/Sonden-Wechselwirkungen, Kohlenhydrat/Sonden-Wechselwirkungen, Antikörper/Sonden-Wechselwirkungen, usw. eingesetzt werden.

Falls es sich im Rahmen der vorliegenden Erfindung bei den Targets um Nukleinsäuren bzw. Nukleinsäuremoleküle handelt, die durch eine Hybridisierung gegen auf einem Sondenarray angeordnete Biopolymer-Sonden nachgewiesen werden, umfassen diese Target-Moleküle in der Regel Sequenzen mit einer Länge von 10 bis 10.000 Basen, bevorzugt von 15 bis 2.000 Basen, ebenfalls bevorzugt von 15 bis 1.000 Basen, insbesondere bevorzugt von 15 bis 500 Basen und am meisten bevorzugt von 15 bis 200 Basen. Weitere Beispiele für bevorzugte Sequenzlängen sind 20, 30 oder 60 Basen. Ihre Sequenz beinhaltet gegebenenfalls die Sequenzen von Primern sowie durch die Primer definierten Sequenzbereiche des Templates. Bei den Target-Molekülen kann es sich insbesondere um einzel- oder doppelsträngige Nukleinsäuremoleküle handeln, von denen ein Strang oder beide Stränge markiert sind, so dass sie in einem der im Stand der Technik üblichen Nachweisverfahren nachgewiesen werden können.

Als Target-Sequenz wird erfindungsgemäß der Sequenzbereich des Targets bezeichnet, der durch Hybridisierung mit der Sonde nachgewiesen wird. Erfindungsgemäß wird auch davon gesprochen, dass dieser Bereich durch die Sonde adressiert wird.

Unter einer Substanzbibliothek wird im Rahmen der vorliegenden Erfindung eine Vielzahl von unterschiedlichen Sondenmolekülen verstanden, vorzugsweise mindestens zwei bis 1.000.000 unterschiedliche Moleküle, besonders bevorzugt mindestens 10 bis 10.000 unterschiedliche Moleküle und am meisten bevorzugt 100 bis 1.000 unterschiedliche Molekülen. Bei speziellen Ausgestaltungen kann eine Substanzbibliothek auch nur mindestens 50 oder weniger oder mindestens 30.000 unterschiedliche Moleküle umfassen. Die Substanzbibliothek ist vorzugsweise als Array auf einem Träger angeordnet.

Unter einem Sonden-Array bzw. Biopolymer-Array wird im Rahmen der vorliegenden Erfindung eine Anordnung von molekularen Sonden bzw. von Biopolymeren bzw. einer Substanzbibliothek auf einem Träger verstanden, wobei die Position einer jeden Sondenspezies separat bestimmt ist. Vorzugsweise umfasst der Array definierte Stellen bzw. vorbestimmte Bereiche, sog. Array-Elemente, die besonders bevorzugt in einem bestimmten Muster angeordnet sind, wobei jedes Array-Element üblicherweise im Wesentlichen nur eine Spezies an Sonden beinhaltet. Die Anordnung der Moleküle bzw. Sonden auf dem Träger kann dabei durch kovalente oder nicht kovalente Wechselwirkungen erzeugt werden. Die Sonden sind dabei auf der dem Reaktionsraum zugewandten Seite des Trägers angeordnet. Eine Position innerhalb der Anordnung, d.h. des Arrays, wird üblicherweise als Spot bezeichnet.

Unter einem Array-Element bzw. einem vorbestimmten Bereich bzw. einem Spot bzw. einem Array-Spot wird im Rahmen der vorliegenden Erfindung ein für die Deposition einer Spezies von molekularen Sonden bestimmtes Areal auf einer Oberfläche eines Trägers verstanden. Eine Spezies von molekularen Sonden sind insbesondere Biopolymere mit derselben Sequenz von Monomeren. Die Summe aller belegten Array-Elemente ist das Sonden-Array. Auf einem vorbestimmten Bereich des Trägers liegt somit nach abgeschlossener Synthese gemäß dem erfindungsgemäßen Verfahren im Wesentlichen nur eine Spezies an Biopolymeren vor. Bei einer besonders bevorzugten Ausführungsform weist der Spot eine quadratische Form auf. Die Kantenlänge eines derartigen quadratischen Spots beträgt vorzugsweise etwa 2 µm bis etwa 128 µm, besonders bevorzugt etwa 32 µm.

Unter einem Trägerelement bzw. Träger bzw. Substanzbibliothekenträger bzw. Substrat wird im Rahmen der vorliegenden Erfindung ein Festkörper verstanden, auf dem die Biopolymere, vorzugsweise in Form eines Sonden-Arrays bzw. Biopolymer-Arrays, synthetisiert werden können. Bei dem Träger, der üblicherweise auch als Matrix, Objektträger oder Wafer bezeichnet wird, kann es sich z.B. um Silizium, Siliziumdioxid, Glas, Kunststoffe, Keramik, Glaskeramik, Quarz handeln. Der Träger, z.B. aus den vorstehend genannten Materialien und/oder weiteren denkbaren Materialien, kann beschichtet sein, z.B. mit Polymeren. Die Schicht kann z.B. aus einem gasförmigen, flüssigen, gelösten, festen Ausgangszustand des aufzubringenden Materials erzeugt werden. Weist der Träger eine derartige Schicht, z.B. eine Polymerschicht auf, wird er im Rahmen der vorliegenden Erfindung auch als Substrat bezeichnet.

Die Gesamtheit aus in Array-Anordnung auf dem Träger bzw. Substrat abgelegten bzw. synthetisierten Molekülen bzw. Biopolymeren bzw. der in Array-Anordnung auf dem Substrat bzw. der Detektionsfläche abgelegten bzw. synthetisierten Substanzbibliothek und dem Träger bzw. Substrat wird häufig auch als "Chip", "Biochip", "Mikroarray", "Microarray", "DNA-Chip", Sondenarray" etc. bezeichnet. Herkömmliche Arrays bzw. Mikroarrays im Rahmen der vorliegenden Erfindung umfassen etwa 2 bis 10.000, vorzugsweise 10 bis 2.000 und besonders bevorzugt mindestens 50 oder mindestens 150 Spots auf einer, vorzugsweise quadratischen, Fläche von z.B. 1 mm bis 5 mm x 1 mm bis 5 mm, vorzugsweise von 2 mm x 2 mm oder 3 mm x 3 mm oder 4,5 mm x 4,5 mm oder etwa 17,64 mm². Die Spots weisen jeweils eine definierte Spezies von Sondenmolekülen bzw. Biopolymeren auf. In der Regel weisen die Spots eines Arrays jeweils unterschiedliche Spezies von Sondenmolekülen bzw. Biopolymeren auf. Üblicherweise umfasst allerdings ein Array auch redundante Spots, d.h. Spots mit derselben Spezies von Sondenmolekülen,

In weiteren Ausgestaltungen umfassen Mikroarrays im Rahmen der vorliegenden Erfindung etwa 50 bis etwa 80.000, vorzugsweise etwa 100 bis etwa 65.000, besonders bevorzugt etwa 1.000 bis etwa 10.000 Spots bzw. Spezies, vorzugsweise unterschiedliche Spezies, von Sondenmolekülen auf einer Fläche von mehreren mm² bis mehreren cm², vorzugsweise etwa 1 mm² bis 10 cm², besonders bevorzugt etwa 2 mm² bis etwa 1 cm² und am meisten bevorzugt etwa 4 mm² bis etwa 25 mm². Beispielsweise weist ein herkömmliches Mikroarray von 2 bis 65.000 Spots bzw., vorzugsweise unterschiedliche, Spezies von Sondenmolekülen auf einer Fläche von etwa 4,2 mm x etwa 4,2 mm auf. Weitere beispielhafte Größen der Flächen des Mikroarrays bzw. der Flächen für die Synthese der Biopolymere sind etwa 1 bis 10 mm x etwa 1 bis 10 mm, vorzugsweise etwa 2 bis 5 mm x etwa 2 bis 5 mm und besonders bevorzugt etwa 3,5 bis 4,5 mm x etwa 3,5 bis 4,5 mm. Üblicherweise beziehen sich Flächen- und/oder Dichteangaben im Rahmen der vorliegenden Erfindung auf die Grundfläche des Mikroarrays. Die Grundfläche eines Mikroarrays ergibt sich aus den Seitenlängen bzw. Kantenlängen des Mikroarrays. Ein Mikroarray mit einer Fläche von z.B. 4,2 mm x 4,2 mm weist somit eine quadratische Grundfläche von 17,64 mm² und eine Seitenlänge von 4,2 mm auf.

Eine Markierung oder ein Marker bezeichnet im Rahmen der vorliegenden Erfindung eine detektierbare Einheit, beispielsweise ein Fluorophor oder eine Ankergruppe, an die eine detektierbare Einheit gekoppelt werden kann.

Als Probe bzw. Probenlösung bzw. Analyt wird im Rahmen der vorliegenden Erfindung die zu analysierende Flüssigkeit mit den nachzuweisenden und ggf. zu amplifizierenden Targetmolekülen bezeichnet.

Unter einer molekularen Wechselwirkung bzw. einer Wechselwirkung wird im Rahmen der vorliegenden Erfindung insbesondere eine spezifische, kovalente oder nicht-kovalente Bindung zwischen einem Targetmolekül und einem immobilisierten Sondenmolekül verstanden. Bei einer bevorzugten Ausführungsform der vorliegenden Erfindung ist die Wechselwirkung zwischen Sonden- und Targetmolekülen eine Hybridisierung.

Als Hybridisierung wird die Bildung von doppelsträngigen Nukleinsäuremolekülen oder Duplexmolekülen aus komplementären einzelsträngigen Nukleinsäuremolekülen bezeichnet. Dabei findet die Assoziation vorzugsweise immer zu Paaren von A und T bzw. G und C statt. Eine Assoziation kann vorzugsweise auch über nicht kanonische Basenpaarungen erfolgen. Hierunter werden Basenpaarungen mit nicht kanonischen Basen bzw. Nukleotiden verstanden, deren Nukleobase sich von dem Pyrimidin- bzw. Puringrundgerüst ableitet, aber ein anderes Muster von Wasserstoffbrücken-Donoren bzw. -Akzeptoren aufweist. Dadurch sind Nukleobasen wie zum Beispiel Xanthin oder Hypoxanthin befähigt, stabile Basenpaarungen, sog. Wobbelbasenpaarungen, mit verschiedenen kanonischen Basen auszubilden. Für Hypoxanthin bzw. dessen Nukleosid Inosin sind stabile Paarungskomplexe mit den Nukleosiden Cytidin, Adenosin oder Thymidin bekannt. Die einzelnen Basenpaarungen zeigen bei diesem System eine abgestufte Stabilität. Der Einbau von nicht kanonischen Basen, die Wobblebasenpaarungen mit den zu analysierenden Target-Sequenzen ermöglichen, in Sondensequenzen an den Stellen einer möglichen Punktmutation einer zu analysierenden Targetsequenz ermöglicht den Nachweis von Allelen dieser Target-Sequenz mit einer Sonden-Spezies, falls deren Nachweis unabhängig von dem Vorliegen der Punktmutation erfolgen soll. Darüber hinaus ist der Einbau von nicht kanonischen Nukleotiden in eine Sondensequenz vor allem vorteilhaft in Bereichen von Spacerregionen zwischen hoch konservierten Bereichen der Sondensequenz, die für die Adressierung eines Targets verantwortlich sind.

Im Rahmen einer Hybridisierung können z.B. DNA-DNA-Duplexes, DNA-RNA-oder RNA-RNA-Duplexes gebildet werden. Durch eine Hybridisierung können auch Duplexes mit Nukleinsäureanaloga gebildet werden, wie z.B. DNA-PNA-Duplexes, RNA-PNA-Duplexes, DNA-LNA-Duplexes und RNA-LNA-Duplexes. Hybridisierungsexperimente werden üblicherweise benutzt, um die Sequenzkomplementarität und damit die Identität zwischen zwei verschiedenen Nukleinsäuremolekülen nachzuweisen.

Unter Biopolymeren werden im Rahmen der vorliegenden Erfindung synthetisch erzeugte Polymere verstanden, die über Polymersiationsreaktionen gebildet werden und gleiche oder ähnliche Bausteine bzw. Monomerbausteine enthalten wie natürlich vorkommende Makromoleküle wie z.B. Nukleinsäuren, Polysaccharide oder Peptide bzw. Proteine. Vorzugsweise handelt es sich bei den Biopolymeren um Peptide, Proteine, Antigene, Antikörper, Kohlenhydrate, Nukleinsäuren und/oder deren Analoga und/oder Mischpolymere der vorstehend genannten Biopolymere.

Unter einer Spezies an Biopolymeren werden im Rahmen der vorliegenden Erfindung Biopolymere mit identischer Sequenz, d.h. mit identischer Sequenz von Monomeren, und der vollständigen gewünschten Länge, d.h. Anzahl an Monomeren, verstanden.

Unter im Wesentlichen nur einer Spezies an Biopolymeren wird im Rahmen der vorliegenden Erfindung ein bestimmter Reinheitsgrad an Biopolymeren mit identischer bzw. gleicher Sequenz, d.h. auch vollständiger Länge, auf einem vorbestimmten Bereich verstanden. So wird beispielsweise bei einer Polymerlänge von 10 bis 30, vorzugsweise 15 bis 25 und besonders bevorzugt etwa 20, unter im Wesentlichen nur einer Spezies an Biopolymeren ein Reinheitsgrad an Biopolymeren mit identischer bzw. gleicher Sequenz auf einem vorbestimmten Bereich von mindestens etwa 10% oder mindestens etwa 30%, vorzugsweise von mindestens etwa 50% und besonders bevorzugt von mindestens etwa 75% verstanden. Insbesondere bestimmt sich der Reinheitsgrad bzw. Reinheitsgrad P bzw. prozentuale Anteil P durch die Formel P = S^{M}, wobei S die durchschnittliche Schrittausbeute bei der Kupplung eines Monomer- und/oder Oligomerbausteins ist, wobei die durchschnittliche Schrittausbeute S mindestens 90%, vorzugsweise mindestens 97%, besonders bevorzugt mindestens 98% und am meisten bevorzugt mindestens 99% beträgt.

Monomere bzw. Monomerbausteine sind im Rahmen der vorliegenden Erfindung alle Verbindungen, aus denen über Polymerisationsreaktionen Biopolymere aufgebaut werden können. Unter einem Monomer wird im Rahmen der vorliegenden Erfindung insbesondere ein Baustein verstanden, der eine oder mehrere konstitutionelle Einheiten bilden kann, deren (vielfache) Wiederholung als konstitutionelle Repetiereinheiten ein Biopolymer ergibt. Konstitutionelle Einheiten bzw. Monomere bei Biopolymeren sind z.B. Nukleotide und Aminosäuren.

Unter einem Oligomer bzw. Oligomerbaustein wird im Rahmen der vorliegenden Erfindung eine Sequenz aus Monomeren verstanden, die vorzugsweise eine Teilsequenz der zu synthetisierenden Biopolymere darstellt. Die bei dem erfindungsgemäßen Verfahren eingesetzten Oligomere können insbesondere durch klassische Festphasensynthese, wie sie z.B. für Peptide und Oligonukleotide beschrieben ist, bereitgestellt werden.

Unter einer reaktiven Gruppe bzw. Funktionalität wird im Rahmen der vorliegenden Erfindung eine funktionelle Gruppe des Trägers oder eines Monomer- bzw. Oligomerbausteins verstanden, die eine Kupplungsreaktion, insbesondere eine Kondensationsreaktion, mit der entsprechenden reaktiven Gruppe eines weiteren Monomer- oder Oligomerbausteins bzw. dem Träger ermöglicht. Reaktive Gruppen von Aminosäurebausteinen sind insbesondere Amino- und Carboxylgruppen. Reaktive Gruppen von Nukleotidbausteinen sind insbesondere Hydroxyl- und Phosphat- bzw. Phosphorester- bzw. aktivierte Phosphorestergruppen wie Phosphotriester- und/oder Phosphoramiditgruppen.

Ein bei den erfindungsgemäßen Verfahren eingesetzter Monomer- oder Oligomerbaustein weist mindestens zwei reaktive Gruppen auf, von denen die eine zur Kupplung an auf der Trägeroberfläche vorliegende freie reaktive Gruppen bzw. an Intermediate der zu synthetisierenden Biopolymere mit freien reaktiven Gruppen dient und die andere für die Kupplung eines weiteren Monomer- oder Oligomerbausteins im nächsten Kupplungsschritt dient.

Üblicherweise werden bei einem Kupplungsschritt in den erfindungsgemäßen Verfahren Monomer- bzw. Oligomerbausteine eingesetzt, bei denen die zur Kupplung an die Trägeroberfläche bzw. an Intermediate der zu synthetisierenden Biopolymere dienende reaktive Gruppe frei ist, d.h. nicht mit einer Schutzgruppe versehen ist, während die für die Kupplung eines weiteren Monomer- oder Oligomerbausteins im nächsten Kupplungsschritt dienende reaktive Gruppe durch eine Schutzgruppe, insbesondere eine temporäre Schutzgruppe, geschützt ist.

Unter auf dem Träger für die Kupplung von Monomer- und/oder Oligomerbausteinen des zu synthetisierenden Biopolymers zur Verfügung stehende reaktive Gruppen werden reaktive Gruppen bzw. Funktionalitäten verstanden, mit denen der Träger versehen ist und die zur Kopplung des ersten Monomer- oder Oligomerbausteins dienen. Falls die Synthese bereits fortgeschritten ist, werden unter auf dem Träger für die Kupplung von Monomer- und/oder Oligomerbausteinen des zu synthetisierenden Biopolymers zur Verfügung stehende reaktive Gruppen Funktionalitäten bzw. reaktive Gruppen des Intermediats des zu synthetisierenden Biopolymers verstanden, die zur Kupplung von weiteren Monomer- und/oder Oligomerbausteinen dienen.

Unter einem Intermediat bzw. Zwischenprodukt des zu synthetisierenden Biopolymers wird im Rahmen der vorliegenden Erfindung insbesondere eine bereits auf dem Träger immobilisierte bzw. synthetisierte Polymerkette aus Monomerbausteinen verstanden, die einer Teilsequenz des gewünschten Biopolymers entspricht. Ein Intermediat liegt nach Durchführung mindestens eines Kupplungsschritts, d.h. der Kupplung mindestens eines Monomer- oder Oligomerbausteins an den Träger vor.

Ein Kupplungsschritt im Rahmen der vorliegenden Erfindung umfasst insbesondere die Aktivierung bzw. Entschützung einer reaktiven Gruppe für die Kupplung eines Monomer- oder Oligomerbausteins, die eigentliche Kupplungsreaktion zwischen reaktiver Gruppe und Monomer- oder Oligomerbaustein sowie ggf. das anschließende Capping des gekuppelten Monomer- oder Oligomerbausteins. Unter der Schrittausbeute S wird im Rahmen der vorliegenden Erfindung die Ausbeute eines Kupplungsschritts verstanden.

Unter temporären Schutzgruppen werden im Rahmen der vorliegenden Erfindung solche Reste bezeichnet, mit denen bestimmte funktionelle Gruppen eines ein oder mehrere reaktive Zentren enthaltenen Moleküls, z.B. eines Monomers, und/oder funktionelle Gruppen auf der Trägeroberfläche vorübergehend gegen den Angriff von Reagenzien geschützt werden können, so dass Reaktionen wie Kondensationen von Monomer- bzw. Oligomerbausteinen nur an den gewünschten (ungeschützten) Stellen stattfinden. Insbesondere sind zahlreiche Schutzgruppen für Amino- und Carboxy-Gruppen von Aminosäuren entwickelt worden, die mit möglichst großen Ausbeuten ausschließlich mit ihren ungeschützten funktionellen Gruppen miteinander zu Peptiden bzw. Proteinen reagieren sollen. Analoge Schutzgruppen sind auch bei der Polynukleotid-Synthese gebräuchlich.

Beispiele für temporäre Schutzgruppen in der Peptidsynthese sind die säurelabile Boc- (tert.-Butyloxycarbonyl) und die basenlabile Fmoc- (Fluorenyl-9-methoxycarbonyl) Gruppe. Beispiele für temporäre Schutzgruppen in der Polynukleotid-Synthese sind die säurelabile DMT- (Dimethoxytrityl) Gruppe und photolabile Schutzgruppen wie sie u.a. in US 5,744,305 beschrieben sind.

Unter permanenten Schutzgruppen werden im Rahmen der vorliegenden Erfindung solche Reste bezeichnet, die während der gesamten Synthese der Biopolymere bestimmte funktionelle Gruppen der Monomerbausteine gegen den Angriff von Reagenzien schützen können, so dass Reaktionen wie Kondensationen von Monomer- bzw. Oligomerbausteinen nur an den gewünschten (ungeschützten) Stellen stattfinden. Derartige permanente Schutzgruppen dienen insbesondere zum Schutz von funktionellen Gruppen in den Seitenketten von Aminosäureresten oder Nukleobasen und werden vorzugsweise erst nach Abschluss der Biopolymersynthese abgespalten.

Beispiele für permanente Schutzgruppen in der Peptidsynthese sind die Z- (Benzyloxycarbonyl) und die Bzl- (Benzyl) Gruppe. Beispiele für permanente Schutzgruppen in der Polynukleotid-Synthese sind die Bz- (Benzoyl), die iBu-(Isobutyryl) und die TBDMS- (t-Butyldimethylsilyl) Gruppe.

Weitere temporäre und permanente Schutzgruppen sind in H.-D. Jakubke, Peptide-Chemie und Biologie, Spektrum Verlag, Heidelberg, Berlin, Oxford, 1996 beschrieben.

Unter einem Aktivierungsreagenz wird im Rahmen der vorliegenden Erfindung ein Reagenz verstanden, dass funktionelle Gruppen eines Moleküls, z.B. eines Monomer- oder Oligomerbausteins, freisetzt bzw. erzeugt, so dass Reaktionen wie Kondensationen mit weiteren Monomer- oder Oligomerbausteinen an den freigesetzten bzw. erzeugten funktionellen Gruppen stattfinden können. Aktivierungsreagenzien im Rahmen der vorliegenden Erfindung sind insbesondere Entschützungsreagenzien.

Unter einem Entschützungsreagenz wird im Rahmen der vorliegenden Erfindung ein Reagenz verstanden, das sich zur spezifischen Entfernung von Schutzgruppen von reaktiven Gruppen eignet, so dass Reaktionen wie Kondensationen von Monomer- bzw. Oligomerbausteinen an den gewünschten (ungeschützten) reaktiven Gruppen stattfinden können.

Beispielhafte Entschützungsreagenzien insbesondere für die Abspaltung säurelabiler Schutzgruppen sind Methansulfonsäure, Oxalsäure, Trifluormethansulfonsäure und/oder Mineralsäuren wie Salzsäure. Die Aktivierungs- bzw. Entschützungsreagenzien werden im Rahmen der vorliegenden Erfindung in wässriger Lösung eingesetzt. So können z.B. etwa 2%ige bis etwa 40%ige wässrige Lösungen, vorzugsweise etwa 5%ige bis etwa 35%ige wässrige Lösungen und besonders bevorzugt etwa 10%ige wässrige Lösungen von Aktivierungs- bzw. Entschützungsreagenzien wie Methansulfonsäure, Trifluormethansulfonsäure, Oxalsäure und/oder Mineralsäuren in den erfindungsgemäßen Verfahren eingesetzt werden. Dem Fachmann ist es ohne weiteres möglich zu bestimmen, wie die Konzentration des Entschützungsreagenzes mit der Dauer der Entschützungsreaktion korreliert ist. So werden beispielsweise besonders bevorzugt 10%ige wässrige Lösungen von Oxalsäure oder Methansulfonsäure zur Aktivierung von mit DMT geschützten Nukleinsäuren in den erfindungsgemäßen Verfahren eingesetzt. Ferner ist beispielsweise bei der Synthese von Polypeptiden der Einsatz stärkerer Säuren möglich als bei der Synthese von Nukleinsäuren, da hier anders als bei der Synthese von Nukleinsäuren keine Nebenreaktionen wie Depurinierung auftreten.

Unter einer Maske wird im Rahmen der vorliegenden Erfindung ein festes Material verstanden, das mit Hohlräumen, Aussparungen bzw. Inseln und/oder Kanälen versehen ist, so dass bei Anordnung der Maske auf der Trägeroberfläche Bereiche des Trägers, die durch die Hohlräume, Aussparungen und/oder Kanäle vorgegeben sind, für die Biopolymersynthese bzw. die Zugabe von Reagenzien wie Aktivierungsreagenzien zugänglich sind, während die durch die Maske abgedeckten Bereiche des Trägers aufgrund der dichtenden Anordnung der Maske auf dem Träger nicht für Reagenzien zugänglich sind. Insbesondere sind die durch die Maske vorgegebenen Bereiche, also die durch die Maske nicht abgedeckten Bereiche, identisch mit jeweils für die Synthese einer Spezies von Biopolymeren ausgewählten vorbestimmten Bereichen des Trägers. Alternativ, falls z.B. zwischen den Spots inerte Bereiche bzw. inerte Stege angeordnet sind, können die durch die Maske abgedeckten Bereiche eine andere Geometrie aufweisen als die Spots. So können in diesen Fall die durch die Maske abgedeckten Bereiche z.B. rechteckige Geometrien aufweisen, während die Geometrien der Spots auf dem Träger z.B. kreisförmig sind. Üblicherweise weisen die bei den erfindungsgemäßen Verfahren eingesetzten Masken mindestens eine Öffnung für die Befüllung und Entleerung mit Reagenzien auf.

Eine im Rahmen der vorliegenden Erfindung eingesetzte Maske tritt insbesondere nicht mit den auf der Trägeroberfläche synthetisierten Biopolymeren bzw. Biopolymer-Intermediaten in Reaktion. Eine derartige Maske ist ferner dazu geeignet, auf der Trägeroberfläche derart angebracht zu werden, dass das Maskenmaterial dichtend auf der Trägeroberfläche aufliegt.

Vorzugsweise weisen die Masken einen, vorzugsweise mehrere mit einem Zu- und Ablauf versehene Kanäle mit einer Breite von etwa 2 µm bis etwa 2 mm bzw. etwa 2048 µm, besonders bevorzugt von etwa 10 µm bis etwa 512 µm und am meisten bevorzugt von etwa 32 µm bis etwa 128 µm auf. Die Kanäle sind üblicherweise linear, wobei die Länge eines linearen Kanals mindestens der Länge eines Arrays entspricht.

Ein derartiger Kanal kann eine oder mehrere Inseln aufweisen, wobei hierbei die Kanalbreiten vorzugsweise größer sind als die Breiten der jeweiligen Inseln. Besonders bevorzugt sind in diesem Falle Kanäle, deren Breite der aktiven Fläche des jeweiligen Chips entsprechen und beispielsweise eine Breite von etwa 2048 µm aufweisen. Die Inseln weisen insbesondere eine Länge und/oder Breite von etwa 2 µm bis etwa 2 mm, besonders bevorzugt von etwa 10 µm bis etwa 512 µm und am meisten bevorzugt von etwa 32 µm bis etwa 128 µm auf.

Unter Elastomeren werden im Rahmen der vorliegenden Erfindung Polymere mit gummielastischem Verhalten verstanden, die bei Raumtemperatur wiederholt mindestens auf das zweifache ihrer Länge gedehnt werden können und nach Aufhebung des für die Dehnung erforderlichen Zwanges sofort wieder annähernd ihrer Ausgangslänge einnehmen (siehe z.B. DIN 7724). Beispiele für Elastomere sind Silikon-Elastomere, wie z.B. PDMS (Polydimethylsiloxan) und KautschukDerivate.

Unter einer Elastomer-Maske bzw. einer Maske aus Elastomeren bzw. einer Elastomere umfassenden Maske wird im Rahmen der vorliegenden Erfindung eine Maske verstanden, bei der zumindest die den Träger kontaktierende Seite der Maske mit einer Schicht aus einem oder mehreren Elastomeren versehen ist.

Unter einer dichten bzw. dichtenden Verbindung zwischen Maske und Träger wird im Rahmen der vorliegenden Erfindung eine Auflage der Maske auf dem Träger derart verstanden, dass die beispielsweise durch die Kanäle der Maske, vorzugsweise in Lösung, zu nicht durch die Maske abgedeckte Bereiche des Trägers zugeführten Reagenzien nicht in durch die Maske abgedeckte Bereiche des Trägers gelangen.

Unter einer Derivatisierung des Trägers wird im Rahmen der vorliegenden Erfindung verstanden, dass die Trägeroberfläche mit funktionellen Gruppen versehen wird, die die Anknüpfung von Spacem bzw. Linkem und/oder Monomerbausteinen gewährleisten. Vorzugsweise erfolgt die Derivatisierung eines Trägers durch Aufbringen eines Polymers auf den Träger, wobei das Polymer mit funktionellen Gruppen versehen ist, die die Anknüpfung von Linkem und/oder Monomerbausteinen gewährleisten. Die Anordnung aus Träger mit einer darauf aufgebrachten Polymerschicht wird im Folgenden auch als Substrat bezeichnet.

Im Falle einer kovalenten Anbindung der zu synthetisierenden Biopolymere bzw. Linker bzw. Spacer finden Träger und/oder ggf. auf diesen Trägem aufgebrachte Polymere, z.B. Silane, Verwendung, die mit reaktiven Funktionalitäten wie Alkoxy, Epoxid, Halogenid, Hydroxyl, Amino, Carboxyl, Thiol, Aldehyd u.dgl. funktionalisiert bzw. modifiziert sind. Des Weiteren ist dem Fachmann auch die Aktivierung einer Oberfläche durch Isothiocyanat, Succinimidester und Imidoester bekannt. Hierfür können aminofunktionalisierte Oberflächen entsprechend derivatisiert werden. Ferner können durch die Zugabe von Kupplungsreagenzien, wie z.B. Dicyclohexylcarbodiimid, entsprechende Immobilisierungen der zu synthetisierenden Biopolymere gewährleistet werden. Weisen die auf dem Träger bzw. Substrat anzubringenden Monomerbausteine Aminogruppen auf, die für die Anknüpfung an den Träger bzw. das Substrat bestimmt sind, so wird der Träger bzw. das Substrat vorzugsweise mit einer Epoxidgruppen-tragenden Verbindung derivatisiert.

Unter Linkem bzw. Spacem werden im Rahmen der vorliegenden Erfindung molekulare Gruppen verstanden, die funktionelle Gruppen auf der Trägeroberfläche mit Monomerbausteinen des zu synthetisierenden Biopolymers verknüpfen. Die im Rahmen der vorliegenden Erfindung eingesetzten Linker bzw. Spacer können geradkettig oder verzweigt sein. Bevorzugte Linker bzw. Spacer werden insbesondere ausgewählt aus Polyethylenglykol und mit Epoxidgruppen funktionalisierten Polymeren wie z.B. epoxyfunktionalisierten Silanen. Verzweigungen können beispielsweise durch Polymer-Spacer bzw. -Linker erzeugt werden, die Glycerol-Bausteine umfassen.

Beispiele für Linker bzw. Spacer insbesondere für die Kupplung von DNA an den Träger bzw. das Substrat sind Polyether (ROR') wie Mischpolymere aus Bisepoxid und Polyethylenglykol, Polyurethane (RNHC(O)OR') wie Mischpolymere aus Alkoxy- und Diisocyanaten und Mischpolymere aus Aryloxy, Alkoxy und Diisocyanaten, Polythiocarbamate (RNHC(O)SR') wie Mischpolymere aus Alkoxyund Diisothiocyanaten und Mischpolymere aus Bismercaptanen und Diisocyanaten, und Polydithiocarbamate (RNHC(S)SR') wie Mischpolymere aus Dithiol und Diisothiocyanate. Ist die Bereitstellung einer Substratoberfläche mit Mercaptofunktionen (RSH) gewünscht, können epoxyfunktionalisierte Silane und Dithiole eingesetzt werden. Für Substrate mit aminierter Oberflächen (RNH₂) finden beispielsweise aminofunktionalisierte Silane als Linker bzw. Spacer Verwendung.

Hier beschrieben ist somit ein Verfahren zur ortspezifischen Synthese von Biopolymeren einer definierten Sequenz auf vorbestimmten Bereichen eines festen Trägers durch schrittweise Kupplung von Monomer- und/oder Oligomerbausteinen, bei dem jeweils vor einem Kupplungsschritt auf mindestens einem vorbestimmten Bereich des Trägers für die Kupplung eines Monomer- und/oder Oligomerbausteins zur Verfügung stehende reaktive Gruppen dadurch aktiviert werden, dass temporäre Schutzgruppen an diesen reaktiven Gruppen durch Zugabe eines Aktivierungsreagenzes in wässriger Lösung entfernt werden.

Wesentliches Merkmal der erfindungsgemäßen Verfahren ist, dass die ortsspezifische Synthese einer Vielzahl von Biopolymer-Spezies mit jeweils definierter Sequenz auf vorbestimmten Bereichen eines festen Trägers unter Verwendung wässriger Reagenzien für die Aktivierung von reaktiven Gruppen erfolgt. Die Aktivierung der reaktiven Gruppen erfolgt durch Abspaltung von an diesen reaktiven Gruppen befindlichen temporären Schutzgruppen durch Entschützungsreagenzien in wässriger Lösung. Die temporären Schutzgruppen werden von solchen vorbestimmten Bereichen des Trägers entfernt, die durch eine auf dem Träger angeordnete Maske vorgegeben sind.

Die erfindungsgemäßen Verfahren erlauben die Verwendung herkömmlicher Reagenzien für die Synthese von Biopolymeren und ermöglichen die Synthese von Biopolymer-Substanzbibliotheken auf miniaturisierten Trägem im Array-Format. Somit können mittels der erfindungsgemäßen Verfahren *in situ* synthetisierten Biopolymere insbesondere als molekulare Sonden bei Nachweisverfahren im Array-Format eingesetzt werden. Dabei bilden die auf vorbestimmten Bereichen des Trägers synthetisierten Biopolymere zusammen mit dem Träger den Mikroarray bzw. Biochip.

Die zu synthetisierenden Biopolymere werden vorzugsweise ausgewählt aus Nukleinsäuren, Peptiden und Peptidnukleinsäuren. Die Auswahl der Biopolymere erfolgt z.B. in Abhängigkeit von der Verwendung eines mittels den erfindungsgemäßen Verfahren herstellbaren Mikroarrays, bei dem die synthetisierten Biopolymere Sondenmoleküle für den Nachweis von Targetmolekülen in einer zu analysierenden Probe entsprechen.

Die örtliche Diskriminierung der Synthese derart, dass auf einem vorbestimmten Bereich des Trägers im Wesentlichen nur eine Spezies von Biopolymeren mit gleicher Sequenz vorliegt, wird insbesondere durch Verwendung von Masken gewährleistet, die wässrige Reagenzien für die Abspaltung von Schutzgruppen gezielt zu den durch die Maske vorgegebenen Bereichen führen. Die Ortsspezifität der Synthese wird somit durch eine Maskierungssstrategie erreicht, bei der die Reagenzien zur Abspaltung der Schutzgruppen, d.h. die Aktivierungs- oder Entschützungsreagenzien, durch die Verwendung von mechanischen Masken nur die von der Maske nicht abgedeckten Bereiche auf der Oberfläche des Trägers benetzen können. Die erfindungsgemäß verwendeten Masken erlauben nicht nur die Bereitstellung durchgehender Kanäle, sondern ggf. auch die Abdeckung einzelner vorbestimmter Bereiche bzw. Spots des Arrays.

Bei Verwendung des erfindungsgemäßen Verfahrens unter Verwendung von Masken zur Herstellung eines Mikroarrays wird die Dichte der Spots auf der Trägeroberfläche durch die Positionierung und Miniaturisierung von Kanälen bzw. Hohlräumen der Masken vorgegeben. Auf diese Weise lässt sich eine Dichte an vorbestimmten Bereichen auf dem Mikroarray von beispielsweise mindestens 1.500 Spots pro cm², vorzugsweise von mindestens 2.500 Spots pro cm², besonders bevorzugt von mindestens 10.000 Spots pro cm² und am meisten bevorzugt von mindestens 25.000 bis zu einer Million Spots pro cm² erreichen. Die Angaben der Dichte an Spots sind in der Regel auf die Grundfläche des Mikroarrays bezogen, die sich wiederum aus den Seiten- bzw. Kantenlängen des Mikroarrays ergibt.

Diese hohen Dichten an vorbestimmten Bereichen erlauben die Bereitstellung äußerst kleiner Mikroarrays mit einer hohen Anzahl an Spots. So können quadratische Chips mit einer Kantenlänge von 1 cm oder 1 mm aber auch von nur noch 0.1 mm hergestellt werden. Bei bevorzugten Ausführungsformen beträgt die Trägerfläche höchstens 1 cm², höchstens 25 mm², höchstens 17,64 mm², höchstens 4 mm², höchstens 1 mm² oder höchstens 100 µm².

Ein hier beschriebenes Verfahren umfasst somit insbesondere die folgenden Schritte:
a) Anordnen einer Maske auf dem Träger, wobei auf dem Träger für die Kupplung von Monomer- und/oder Oligomerbausteinen des zu synthetisierenden Biopolymers zur Verfügung stehende reaktive Gruppen mit Schutzgruppen versehen sind;
b) Aktivieren von reaktiven Gruppen durch Entfernen von temporären Schutzgruppen an den durch die Maske vorgegebenen Bereichen mittels Zugabe eines Aktivierungsreagenzes in wässriger Lösung;
c) Kupplung eines Monomer- und/oder Oligomerbausteins an in Schritt b) aktivierte reaktive Gruppen; und
d) Wiederholen der Schritte a) bis c), bis die gewünschten Biopolymere auf vorbestimmten Bereichen des Trägers synthetisiert sind.

Die Aktivierungs- bzw. Entschützungsreagenzien werden vorzugsweise ausgewählt aus Oxalsäure, Methansulfonsäure, Trifluoressigsäure, Salzsäure und/oder Natriumhydroxid und in wässriger Lösung eingesetzt. Mit wässrigen Lösungen der vorgenannten Aktivierungsreagenzien lassen sich insbesondere bevorzugte Schutzgruppen wie z.B. Dimethoxytrityl bei der Polynukleotidsynthese und t-Butyloxycarbonyl bei der Peptidsynthese entfernen.

Dem Fachmann ist ersichtlich, welche Zeitdauer in Abhängigkeit von der Konzentration des jeweiligen für den Entschützungsschritt verwendeten Reagenzes zu wählen ist. So beträgt beispielsweise eine bevorzugte Dauer der Entschützungsreaktion bei Verwendung von 10%iger Oxalsäure etwa zwanzig Minuten und bei Verwendung von 10%iger Methansulfonsäure etwa fünf Minuten.

Vorzugsweise wird lediglich die Abspaltung der Schutzgruppen unter Verwendung der Maske durchgeführt, so dass der restliche Synthesezyklus zur Anknüpfung eines Monomers offen, d.h. ohne Maske, beispielsweise in einer herkömmlichen Synthesekammer ablaufen kann.

Vorzugsweise werden Masken- und Trägermaterial derart ausgewählt, dass die auf dem Träger angeordnete Maske mit diesem dicht verbunden ist, indem die Maske beispielsweise durch Adhäsion auf dem Träger haftet.

So wird der Träger vorzugsweise ausgewählt aus Silizium wie z.B. Siliziumdioxid, Gläsern wie Natronkalk-Gläsern, Borosilicat-Gläsern, Borofloat-Gläsern, z.B. BF 33 Glas (Schott, Mainz, Deutschland), Quarzglas, Quarz, einkristallinem CaF₂, Saphirscheiben, Topas und/oder Kunststoffen wie PMMA und/oder Polycarbonat, Keramik, Ta₂O₅, TiO₂, Si₃N₄ und/oder Al₂O₃. Besonders bevorzugt ist der Träger aus Silizium oder Borofloat-Glas.

Die eingesetzten Masken bestehen vorzugsweise aus inerten, nicht an der Biopolymersynthese teilnehmenden Materialien. Die erfindungsgemäß eingesetzten Masken weisen den wesentlichen Vorteil auf, dass sie ohne Beeinträchtigung ihrer Funktionalität vom Trägermaterial abgelöst werden können. Somit unterscheiden sie sich von den im Stand der Technik als Maskenmaterial beschriebenen Photoresistschichten, die nur durch Auflösen der Schicht vom Träger entfernt werden können.

Das Aufbringen der Maske auf dem Träger führt zur Bildung von ggf. mit Inseln versehenen Kanälen bzw. von Freiräumen zwischen den Stellen, auf denen kein Maskenmaterial aufliegt. Die Aktivierungs- bzw. Entschützungsreagenzien können dann in die Freiräume fließen, d.h. die Maske dient der selektiven Aktivierung, insbesondere der selektiven Entschützung.

Die Frei- bzw. Hohlräume, die durch derartige Kanäle ausgebildet werden, können beliebige Grundformen wie z.B. quadratisch, rechteckig, kreisförmig u. dgl. annehmen. Ein derartiger Hohlraum kann mehrere Spots, z.B. zwei bis zehn Spots, aber auch nur einen Spot oder sämtliche Spots für Reagenzien zugänglich machen.

Bei der Anordnung der Maske auf dem Träger werden die Maske und der Träger zueinander vorzugsweise mit einer Genauigkeit von wenigen µm, besonders bevorzugt etwa 1,5 µm bis etwa 3 µm und am meisten bevorzugt etwa 1 µm bis etwa 2 µm positioniert. Der Abstand zwischen den vorbestimmten Bereichen ist somit wesentlich geringer als jener beim Spotting-Verfahren, da bei letzteren Verfahren der begrenzende Faktor die Tropfengröße und deren Abstand zueinander ist. Somit ermöglichen die erfindungsgemäßen Verfahren die Bereitstellung einer wesentlich höheren Dichte an vorbestimmten Bereichen auf dem Träger.

Die Positionierung der Maske auf den Träger erfolgt dabei vorzugsweise durch auf dem Träger angebrachte Markierungen.

Durch Verschiebung einer Maske in x,y-Richtung und/oder Drehung der Maske um einen beliebigen Winkel zwischen 0 und 360° können mit einer geringen Anzahl von Masken eine Vielzahl von Mustern auf der Trägeroberfläche erzeugt werden. Auf diese Weise können Mikroarrays mit beliebigen Kombinationen von Biopolymer-Sonden gebildet werden.

Vorzugsweise werden Masken aus Elastomeren eingesetzt. Besonders bevorzugt sind Masken aus Polydimethylsiloxan. Der Einsatz von Elastomeren gewährleistet eine Adhäsion zwischen Träger und Maske, ohne dass eine externe Kraft erforderlich ist, um die Maske mit dem Träger in dichtender Weise zu verbinden. Dabei kann es ferner bevorzugt sein, dass lediglich die dem Träger bei dem erfindungsgemäßen Verfahren zugewandte Schicht der Maske aus Elastomeren gebildet ist. Eine derartige Schicht aus Elastomeren ist bei dieser Ausgestaltung der Maske üblicherweise auf einem festen Grundkörper z.B. aus Glas oder Kunststoff aufgebracht.

So wird beispielsweise bei Verwendung einer Polydimethylsiloxan-Maske die Maske auf dem Träger mit der höchst möglichen Genauigkeit positioniert und durch Kontakt der Polydimethylsiloxan-Maske mit der Synthese-Oberfläche des Trägers adhäsiv und dichtend verbunden. Durch den Verbund aus Träger bzw. Wafer mit den Masken, die über geometrische Strukturen wie beispielsweise Kanäle mit Stempeln bzw. Inseln verfügen, werden entsprechende Hohlräume erzeugt, durch die das Entschützungsreagenz fließen und somit die Oberfläche des Wafers für den nachfolgenden Syntheseschritt aktivieren kann.

Ferner wird einer bevorzugten Ausführungsform der vorliegenden Erfindung ein Träger eingesetzt, der eine Oberflächenrauigkeit aufweist.

Derartige Träger mit einer rauen Trägeroberfläche weisen eine Reihe von Vorteilen auf, insbesondere wenn die erfindungsgemäß hergestellten Biopolymere in Array-Experimenten als Sonden eingesetzt werden.

Durch Bereitstellung einer rauen Oberfläche auf dem Träger wird die Anzahl an potentiellen Immobilisierungsstellen für die zu synthetisierenden Biopolymere erhöht. Dies führt zu einem erhöhten dynamischen Messbereich sowie einem verbesserten Signal-zu-Rausch-Verhältnis bei der Durchführung von Nachweisverfahren mittels der erfindungsgemäß hergestellten Mikroarrays. Die Verwendung von Trägern mit rauen Oberflächen ermöglicht somit eine verbesserte Analyse von geringen Probenmengen.

Ferner wird die Zugänglichkeit der synthetisierten Biopolymere auf einer rauen Oberfläche für zu analysierende Molekülen verbessert, wodurch eine schnellere und vollständigere Wechselwirkung zwischen Target und den Sonden, nämlich den synthetisierten Biopolymeren, gewährleistet wird. Des Weiteren werden kinetische Prozesse, die in der Mikroarray-Analyse ablaufen, wie z.B. die Zuführung von Reagenzien, Spülschritte und dgl. deutlich beschleunigt.

Dabei ist es bevorzugt, dass lediglich die Oberfläche innerhalb der vorbestimmten Bereiche eine Rauigkeit aufweist und somit Stege um die vorbestimmten Bereiche mit glatter Oberfläche gebildet werden. Derartige Stege um die vorbestimmten Bereiche erhöhen die Hafteigenschaften der Maske und gewährleisten somit ein dichtes Aufliegen der Maske auf der Substratoberoberfläche.

Die bei dem erfindungsgemäßen Verfahren eingesetzten Träger werden üblicherweise vor Beginn der Synthese gereinigt. Die Reinigung erfolgt vorzugsweise mittels für das jeweilige Trägermaterial üblicher Protokolle. Beispielsweise kann die Reinigung mit Caroscher Säure oder Tetramethylammoniumhydroxid-Lösung erfolgen.

Die bei den erfindungsgemäßen Verfahren eingesetzten Träger werden ferner üblicherweise vor der Durchführung der Synthese vorbehandelt. Eine derartige Vorbehandlung des Trägers kann insbesondere durch Derivatisierung des Trägers erfolgen. Die Derivatisierung der Träger kann insbesondere dadurch erfolgen, dass die Oberflächenseite des Trägers, die für die Synthese zur Verfügung steht, mit einer Polymerschicht versehen wird. Vorzugsweise wird die Polymerschicht aus Silanen, Gelatine und/oder Polyurethan gebildet. Die Schichtdicke einer derartigen auf dem Träger angebrachten Polymerschicht beträgt vorzugsweise etwa 1 nm bis etwa 5 nm, besonders bevorzugt etwa 2 nm bis etwa 4 nm und am meisten bevorzugt etwa 3 nm. Der Randwinkel einer derartigen Polymerschicht beträgt vorzugsweise durchschnittlich etwa 40° bis etwa 60° und besonders bevorzugt etwa 50°. Zur Herstellung eines silanisierten Trägers kann der Träger, z.B. ein Glaswafer, beispielsweise mit Glycidoxypropyltrimethoxysilan versehen werden.

Falls bei den erfindungsgemäßen Verfahren Träger eingesetzt werden, die mit einer Polymerschicht versehen sind, so wird diese Polymerschicht bei einer weiteren bevorzugten Ausführungsform vor Beginn der Biopolymersynthese modifiziert, insbesondere um eine hohe Anzahl an funktionellen Gruppen, beispielsweise Hydroxylgruppen, für die Anknüpfung von Monomerbausteinen des zu synthetisierenden Biopolymers bereitzustellen. Eine derartige Modifizierung kann beispielsweise durch Zugabe von Säure, durch Zugabe von Hydroxylgruppen-tragenden Linkem wie Polyalkylenglykolen, Modifizierung mit einer dreidimensionalen Polymerschicht und/oder durch Behandlung mit einer Lackschicht erfolgen.

Die Zugabe von Säure zur Modifizierung einer auf dem Träger aufgebrachten Polymerschicht ist insbesondere vorteilhaft, wenn die Polymerschicht des Trägers Epoxidgruppen trägt, beispielsweise wenn der Träger mit einer Schicht aus Glycidoxypropyltrimethoxysilan versehen ist. Die Säure, beispielsweise eine starke Säure wie Schwefelsäure oder Salzsäure, führt zur Öffnung von Epoxiden. Auf diese Weise werden Diole bereitgestellt, die mit geeigneten Funktionalitäten des anzuknüpfenden Monomerbausteins, wie z.B. Phosphorestern bzw. aktivierten Phosphorestergruppen bei der Polynukleotidsynthese, reagieren können.

Alternativ können die auf dem Träger angebrachten Polymere durch Umsetzung mit Hydroxylgruppen-tragenden Linkem modifiziert werden. Bevorzugte Linker sind insbesondere Polyalkylenglykole wie Polyethylenglykol z.B. PEG200, Polyether (ROR') wie Mischpolymere aus Bisepoxid und Polyethylenglykol, Polyurethane (RNHC(O)OR') wie Mischpolymere aus Alkoxy- und Diisocyanaten und Mischpolymere aus Aryloxy, Alkoxy und Diisocyanaten, Polythiocarbamate (RNHC(S)OR') wie Mischpolymere aus Alkoxy- und Diisothiocyanaten und Mischpolymere aus Bismercaptanen und Diisocyanaten, Polydithiourethane (RNHR(S)SR') wie Mischpolymere aus Dithiol und Diisothiocyanaten sowie epoxyfunktionalisierte Silane und Dithiole, die Substratoberflächen mit Mercaptofunktionen (RSH) bereitstellen. So wird bei einer besonders bevorzugten Ausführungsform ein mit Glycidoxypropyltrimethoxysilan beschichteter Träger durch Umsetzung mit Polyethylenglykol modifiziert.

In einer weiteren Ausgestaltung der Modifizierung wird ein mit einer Polymerschicht versehener Träger mit einer dreidimensionalen Polymerschicht modifiziert. Eine derartige dreidimensionale Polymerschicht kann beispielsweise durch *in situ-*Polymerisation eines Polyalkylenglykols wie Polyethylenglykol mit einem Quervemetzer auf dem bereits mit einer Polymerschicht, z.B. einer Silanschicht, versehenen Träger erzeugt werden. Bevorzugte Quervemetzer sind Bisepoxide wie z.B. Bisglycidyloxypropylmethan.

Eine derartige dreidimensionale Polymerschicht weist vorzugsweise eine Dicke von etwa 1 nm bis 100 µm, vorzugsweise von etwa 2 nm bis etwa 10 µm und besonders bevorzugt von etwa 3 nm bis etwa 100 nm auf. Eine derartige dreidimensionale Polymerschicht ist ferner vorzugsweise porös. Die Anknüpfung bzw. Kupplung der Monomer- bzw. Oligomerbausteine erfolgt üblicherweise an funktionelle Gruppen, insbesondere Hydroxylgruppen, der dreidimensionalen Polymerschicht.

In einer weiteren bevorzugten Ausgestaltung wird die gegebenenfalls bereits modifizierte Polymerschicht auf der Trägeroberfläche mit einer Lackschicht versehen. Der Lack wird vorzugsweise ausgewählt aus Photolacken wie z.B. einem Positiv-Resist-Lack und Phenolharzen wie z.B. Novolaken. Die Lackschicht wird anschließend üblicherweise wieder im Wesentlichen vollständig entfernt. So wird beispielsweise eine wie vorstehend beschrieben mit Polyethylenglykol-Linkern modifizierte Polymerschicht mit einem photosensitiven Lack versehen, der anschließend durch Belichtung und Entwicklung wieder im Wesentlichen komplett entfernt wird. Überraschenderweise wurde gefunden, dass die Eigenschaften der auf dem Träger verbliebenen Polymerschicht durch eine derartige Lackbehandlung vorteilhaft verändert sind, insbesondere wenn die auf einem derartig modifizierten Substrat synthetisierten Biopolymere als Sondenmoleküle in Array-Experimenten dienen. So hat sich gezeigt, dass die Signalintensität erhöht und die Diskriminierung zwischen Match- und Mismatchsonden verbessert wird.

Ferner ist es bevorzugt, dass die vorbestimmten Bereiche des Trägers durch für die Synthese von Biopolymeren durch inerte Bereiche voneinander abgetrennt sind. Auf diesen inerten Bereichen kann vorzugsweise keine Synthese von Biopolymeren erfolgen. Durch diese Vorstrukturierung der Träger wird die räumliche Auflösung und somit die örtliche Spezifität der Biopolymersynthese verbessert. Diese inerten Bereiche liefern bei Verwendung der erfindungsgemäß auf vorbestimmten Bereichen eines Trägers bzw. Substrats synthetisierten Biopolymere ein genaues Maß für das Hintergrundsignal.

Die Abtrennung der für die ortsspezifische Synthese der jeweiligen Biopolymer-Spezies vorgesehenen vorbestimmten Bereiche bzw. Spots auf dem Träger durch inerte Bereiche wird vorzugsweise durch folgende Ausgestaltungen der erfindungsgemäßen Verfahren erreicht.

So können beispielsweise die Spots durch metallische Bereiche auf dem Träger voneinander abgetrennt werden, die für die Anbringung von Monomeren inert sind. Grundsätzlich können sämtliche Nebengruppenmetalle und deren Legierungen als Material für derartige inerte Bereiche Verwendung finden. Die Materialien für inerte Bereiche werden vorzugsweise ausgewählt aus Metallen wie Titan, Gold, Nickel, Chrom und Legierungen aus den vorstehenden Metallen wie Nickel-Chrom. Zur Erzeugung der metallischen Begrenzungen zwischen den vorbestimmten Bereichen kann beispielsweise eine Metallschicht durch Sputtern auf die Trägeroberfläche aufgebracht und anschließend nach einem vorgegebenen Muster strukturiert werden. Die Strukturierung kann beispielsweise durch Photolithographie und anschließendes Ätzen nach einem vorgegebenen Muster erfolgen. Die Metallschicht bzw. die metallischen inerten Bereiche auf dem Träger weisen vorzugsweise eine Dicke von etwa 50 nm bis 150 nm und besonders bevorzugt von etwa 100 nm auf.

Inerte Bereiche zur Abtrennung der für die Synthese der jeweiligen Biopolymer-Spezies vorbestimmten Bereiche auf dem Träger können ferner bei einer weiteren Ausführungsform der vorliegenden Erfindung durch Entfernen der für die Anknüpfung der Monomerbausteine vorgesehenen funktionellen Gruppen auf der Trägeroberfläche bzw. der auf dem Träger angebrachten Polymerschicht bereitgestellt werden. Eine selektive Entfernung beispielsweise der ggf. auf dem Träger angebrachten und ggf. modifizierten Polymerschicht führt zu Bereichen auf dem Träger, auf denen im Wesentlichen keine funktionellen Gruppen bzw. keine reaktiven Gruppen vorliegen und somit keine Biopolymersynthese möglich ist.

Bei dieser Ausführungsform werden auf der Trägeroberfläche befindliche funktionelle Gruppen bzw. Linker bzw. Polymerschichten vorzugsweise durch Ätzen, wie z.B. Plasma-Ätzen, entfernt. Hierzu kann beispielsweise der Träger, der wie vorstehend beschrieben mit einer Polymerschicht derivatisiert ist, mit einem Photolack und/oder Resist beschichtet werden. Durch Anordnung einer Maske, insbesondere einer Lithographiemaske, auf dem Träger und anschließende Belichtung werden, bei Verwendung eines Positiv-Resists, die belichteten Bereiche des Resists in einem nachfolgenden Entwicklungsprozess abgelöst. Auf diese Weise wird die Polymerschicht in definierten Bereichen, die die inerten Bereiche bilden sollen, z.B. durch Verwendung von Argon oder O₂-Plasma abgetragen, während die vorher durch die Maske abgedeckten Bereiche der funktionellen Polymerschicht durch unentwickelten Photolack oder Resist geschützt sind. Anschließend wird die unentwickelte Lackschutzschicht von der funktionellen Polymerschicht durch weitere Belichtung und nachfolgende Entwicklung abgelöst. So kann eine über den Träger homogene Struktur mit funktionellen Polymer-Pads mit einer Schichtdicke von vorzugsweise etwa 1 nm bis etwa 10 nm, besonders bevorzugt etwa 2 nm bis 7 nm und am meisten bevorzugt 3 bis 5 nm, z.B. etwa 4 nm erzeugt werden. Die Polymer-Pads entsprechen den vorbestimmten Bereichen und weisen funktionelle Gruppen für die Anknüpfung der Monomerbausteine der Biopolymere auf.

Das erfindungsgemäße Verfahren zur ortsspezifischen Synthese von Biopolymeren einer definierten Sequenz auf vorbestimmten Bereichen eines festen Trägers umfasst üblicherweise eine zyklische Abfolge von Prozessschritten pro Einbau eines Monomers bzw. Oligomers, nämlich:
a) Alignment, d.h. Anordnung einer Maske auf dem Träger bzw. Substrat,
b) Aktivierung bzw. Entschützung,
c) Separation bzw. Ablösen der Maske von dem Träger bzw. Substrat, und
d) Kupplung eines Monomer- bzw. Oligomerbausteins mit funktionellen Gruppen der Träger- bzw. Substratoberfläche bzw. mit dem bereits auf dem jeweiligen vorbestimmten Bereich synthetisierten Intermediat der Biopolymer-Kette.

Pro Synthesezyklus wird somit jeweils ein Monomer oder Oligomer auf den durch die Maske vorgegebenen vorbestimmten Bereichen des Trägers aufgebracht.

In einem nächsten Schritt werden die temporären Schutzgruppen der zuletzt gekuppelten Bausteine an den durch die Maske vorgegebenen Bereichen durch Zugabe einer wässrigen Lösung eines Entschützungsreagenzes entfernt. Das wässrige Entschützungsreagenz durchströmt die Kanäle bzw. Hohlräume zwischen Maske und Träger, so dass die Schutzgruppen an den durch die Maske nicht abgedeckten Bereichen entfernt werden können.

Im Anschluss an die Entschützungsreaktion werden die Hohlräume bzw. Kanäle üblicherweise gespült und getrocknet.

Im Anschluss an die Entschützungsreaktion wird die Maske vorzugsweise von dem Träger bzw. Substrat abgelöst bzw. getrennt. Dies kann insbesondere durch eine Trennscheibe z.B. in Form eines Skalpells erfolgen, die in der Ebene zwischen dem Träger bzw. dem Substrat und der Maske in Richtung der Mitte des Trägers bzw. Substrats bewegt wird. Aufgrund der durch derartige Scheiben ausgeübten Kraft können Maske und Träger bzw. Substrat voneinander getrennt werden. Weitere Ausgestaltungen für den Vorgang des Ablösens der Maske von dem Träger sind dem Fachmann ohne weiteres ersichtlich.

In einem nächsten Schritt des erfindungsgemäßen Verfahrens wird der Träger bzw. das Substrat mit einer Lösung eines Monomer- oder Oligomerbausteins kontaktiert. Dadurch kommt es auf den vorbestimmten Bereichen, auf denen die Schutzgruppen durch die vorangegangene Entschützung entfernt worden sind, zur Kupplung von Monomerbausteinen bzw. Monomeren an die durch die Entschützungsreaktion freigesetzten funktionellen Gruppen der Trägeroberfläche bzw. des Intermediats der Biopolymerkette. Dazu wird der Träger beispielsweise in eine Synthesekammer bzw. Reaktionskammer bzw. Kartusche mit Öffnungen, durch die die Kartusche mit den zu verwendenden Synthesereagenzien befüllt werden kann, überführt. Eine derartige, ggf. druckdichte, Reaktionskammer wird vorzugsweise mit einem herkömmlichen Syntheseautomaten verbunden, so dass ein für die jeweilige Biopolymersynthese übliches Syntheseprotokoll für die Kupplung eines Monomers durchlaufen werden kann. Zur Synthese von DNA mittels des erfindungsgemäßen Verfahrens kann beispielsweise der Syntheseautomat ÄKTA von Amersham Bioscience (Freiburg, Deutschland) eingesetzt werden.

Nach erfolgter Anknüpfung eines Monomers oder Oligomers an funktionelle Gruppen auf dem Träger bzw. an dem Intermediat der Biopolymerkette können die vorstehend beschriebenen Schritte Anordnen der Maske, Entschützung, ggf. Ablösen der Maske und Synthese weiterer Monomerbausteine an die bestehende Biopolymerkette wiederholt werden, bis auf den vorbestimmten Bereichen des Trägers jeweils das vollständige Biopolymer mit der gewünschten Sequenz synthetisiert ist.

Nach Abschluss der Synthese werden üblicherweise die an den Monomerbausteinen angebrachten permanenten Schutzgruppen abgespalten. Dabei werden vorzugsweise die im Stand der Technik für die jeweiligen Schutzgruppen beschriebenen Standardbedingungen eingesetzt (siehe u.a. T. W. Greene, P. G. M. Wuts, "Protective Groups in Organic Synthesis" John Wiley & Sons INC, New York; H.-D. Jakubke, siehe oben). So können beispielsweise bei der Synthese von DNA mit den erfindungsgemäßen Verfahren die an den Nucleobasen angebrachten permanenten Schutzgruppen mit einer wässrigen Ammoniak-Lösung entfernt werden.

Nach Beendigung des Syntheseprotokolls wird der Träger mit den darauf synthetisierten Biopolymeren aus der Kartusche ausgebaut, gespült und anschließend getrocknet.

Bei der ggf. automatisierten Standard-DNA-Synthese werden üblicherweise die Schritte (i) Abspaltung der temporären Schutzgruppen, (ii) Kupplung des Monomer-oder Oligomerbausteins in Anwesenheit eines Aktivators, (iii) Cappings von nicht abreagierten Hydroxylfunktionalitäten des Substrates bzw. der Biopolymerketten-Intermediats sowie (iv) Oxidation des Phosphits zu Phosphotriester durchlaufen. Die Durchführung dieser Schritte wird im Folgenden beispielhaft beschrieben.

Die Synthese erfolgt üblicherweise entgegengesetzt zur Biosynthese vom 3'-Ende zum 5'-Ende. Dabei werden beispielsweise Oxalsäure oder Methansulfonsäure als Reagenz für die Abspaltung der herkömmlicherweise verwendeten Dimethyltrityl-(DMT) Schutzgruppe eingesetzt.

Die Kupplung des Monomer- bzw. Oligomerbausteins, das z.B. als Phosphoramidit (N,N-Diisopropylaminophosphit) vorliegt, an das Substrat erfolgt nach Aktivierung mit einer schwachen Säure wie z.B. Tetrazol. Hierbei ist zu beachten, dass durch Zugabe der Säure nicht die temporäre Schutzgruppe DMT abgespalten wird.

Nach Spülen des Substrates erfolgt ein Cappingschritt, bei denen mit Hilfe von Reagenzien wie Pyridin, N-Methylimidazol und Acetanhydrid die nicht abreagierten Hydroxylgruppen in entsprechende Essigester-Derivate überführen. Abschließend wird wiederum mit Lösungsmitteln gespült.

Im vierten Schritt wird die resultierende Phosphit-Verbindung z.B. mittels einer wässrigen Iod-Lösung unter Zusatz von Pyridin in den stabileren Phosphortriester überführt bzw. oxidiert.

Nach dem Spülen beginnt ein neuer Synthesezyklus mit der Abspaltung der Schutzgruppen, z.B. der DMT-Schutzgruppen.

Nach vollständigem Aufbau der gewünschten Nukleinsäure werden üblicherweise die permanenten Schutzgruppen entfernt. Die Ausbeute je Syntheseschritt liegt vorzugsweise bei über 98%.

Ferner wird im Folgenden beispielhaft die Durchführung einer ggf. automatisierten Peptidsynthese im Rahmen der vorliegenden Erfindung beschrieben.

Analog zum Synthesezyklus von DNA besteht der erste Schritt bei der Peptidsynthese üblicherweise in der Abspaltung der temporären Schutzgruppe. In der Standard-Festphasensynthese (SPPS, *solid phase peptide synthesis*) wird vorzugsweise die basenlabile Fmoc-Schutzgruppe verwendet, da diese aufgrund ihres Absorptionsspektrum mittels UV-Sensoren ausgelesen werden kann und weniger aggressive Entschützungsreagenzien verwendet werden müssen. Alternativ ist auch der Einsatz einer säurelabilen Boc-Schutzgruppe denkbar.

Nach Spülen des Trägers mit Lösungsmittel werden der entsprechende Aminosäurebaustein bzw. das Aminosäurederivat sowie ein Kupplungsreagenz wie z.B. Dicyclohexylcarbodiimid (DCC), O-Benzotriazol-N,N,N,N-tetramethyluroniumhexanfluorophosphat (HBTU), Hydroxybenzotrizol (HOBt) sowie eine Base wie z.B. 1,8-Diazabicyclo[5.4.0]undec-7-en (DBU) jeweils im Überschuss mit dem Träger zur Reaktion gebracht. Nach vollständiger Reaktion wird die Reaktionskammer in der Regel gespült.

Abschließend wird analog zur der Synthese von Nukleinsäuren in einem Cappingschritt die nicht abreagierten Aminofunktionalitäten durch Zugabe von Acetanhydrid und Base blockiert.

Nach Spülen des Substrates mit Lösungsmittel erfolgt ein neuer Reaktionszyklus.

Durch Wahl von geeigneten, dem Fachmann bekannten Reaktionsbedingungen können bei der Synthese von Peptiden häufig alle permanenten Schutzgruppen gleichzeitig entfernt werden.

Das erfindungsgemäße Verfahren wird insbesondere verwendet, um wie vorstehend beschriebene Mikroarrays herzustellen, bei denen die erfindungsgemäß auf vorbestimmten Bereichen *in situ* synthetisierten Biopolymere als molekulare Sonden dienen.

Hier bechrieben wird ein Mikroarray mit auf vorbestimmten Bereichen immobilisierten Biopolymer-Sonden, bei dem der prozentuale Anteil P an Biopolymeren, die die gewünschte Zahl M an Monomeren aufweisen, durch die Formel P = S^{M} gekennzeichnet ist,
wobei S die durchschnittliche Ausbeute eines Kupplungsschritts, d.h. die Ausbeute bei der Kupplung eines Monomer- und/oder Oligomerbausteins ist,
und wobei die Dichte an vorbestimmten Bereichen beispielsweise mindestens 1.500 Spots pro cm² beträgt und die durchschnittliche Schrittausbeute S mindestens 95%, vorzugsweise mindestens 96%, besonders bevorzugt mindestens 98% und am meisten bevorzugt mindestens 99% beträgt.

Die hier beschriebenen Mikroarrays weisen vorzugsweise eine Dichte an vorbestimmten Bereichen von mindestens 2.500 Spots pro cm², besonders bevorzugt von mindestens 10.000 Spots pro cm² und am meisten bevorzugt von mindestens 25.000 bis zu einer Million Spots pro cm² auf.

Die Trägerfläche, die sich aus den Kantenlängen des Trägers berechnet und auf die die Dichte an Spots bezogen ist, beträgt bei bevorzugten Ausführungsformen höchstens 1 cm², höchstens 25 mm², höchstens 17,64 mm², höchstens 4 mm², höchstens 1 mm² oder höchstens 100 µm².

Hier beschrieben ist die Verwendung von wässrigen Lösungen von Entschützungsreagenzien in der Synthese von Biopolymeren.

Bei der Durchführung von Entschützungsreaktionen spielt die Protonierung der Schutzgruppen bei säurelabilen Schutzgruppen bzw. die Deprotonierung bei basenlabilen Schutzgruppen eine wesentliche Rolle. Bei der Verwendung von Säuren bzw. Basen in Lösungsmitteln ist zu beachten, dass der jeweilige pK_{S} bzw. pK_{B}-Wert von Lösungsmittel zu Lösungsmittel deutlich variieren kann. Insbesondere unterscheiden sich die pK_{S} bzw. pK_{B}-Werte in organischen Lösungsmitteln wesentlich von jenen in wässrigen Systemen. Überraschenderweise wurde im Rahmen der vorliegenden Erfindung gefunden, dass derartige Entschützungsreaktionen bei der Synthese von Biopolymeren auch mit Entschützungsreagenzien in wässriger Lösung durchgeführt werden können.

Die folgenden Beispiele dienen der Erläuterung der Erfindung und sollen nicht in einschränkender Weise ausgelegt werden.

### Beispiele

### Beispiel 1: Entschützung mit einer 10%igen wässrigen Lösung von Oxalsäure

### a) Wafersubstrat

Es findet ein Glaswafer (BF 33 Glas, Schott) mit 0,7 mm Dicke Verwendung.

### b) Reinigung und Strukturierung

Die Reinigung des Wafers erfolgt mit einer JTB-100 Lösung (Tetramethylammonium-hydroxid-Lösung) nach folgendem Protokoll:

Der Wafer wird für 30 min in einem Ultraschallbad in 10% Deconex vorgereinigt, anschließend mehrfach mit entionisierem Wasser (DI-Wasser) gespült und dann für 30 min bei 70°C in JTB 100-Lösung inkubiert. Der Wafer wird 6 x mit VE-Wasser und 1 x mit DI-Wasser gespült und anschließend auf einer Waferzentrifuge bei 3000 min⁻¹ für 1 min getrocknet.

Auf den gereinigten Wafer wird durch Sputtern eine Titanschicht von ca. 100 nm Dicke aufgebracht. Die Titanschicht wird mittels Positivlack AZ 1514 H und Belichtung durch eine entsprechende Maske strukturiert. Nach der Strukturierung mittels Titanätzbad (0,8% HF, 1,3% Salpetersäure) ist die aktive Fläche jedes Arrays (ca. 2 mm) von einer unterbrochenen Kette von quadratischen Titan-Strukturen mit 32 µm Kantenlänge umgeben. Von der übrigen Waferfläche wird das Titan vollständig entfernt. Der Photoresist wird mittels ALEG 625 und PRS 3000 (Mallinckrodt Baker, Griesheim, Deutschland) entfernt.

Der Wafer wird kurz mit DI-Wasser benetzt und dann im vortemperierten Wasserbad (55°C) mit Natronlauge bei 50°C für 30 s angeätzt.

Anschließend wird in folgender Reihenfolge gespült: 6x VE-Wasser (je 1 min, Wafer in Halterung bewegen); 2 x 5 min DI-Wasser.

Zum Abschluss wird der Wafer trocken geschleudert und im Umluft-Trockenschrank ausgeheizt.

### c) Silanisierung

Die Wafer werden in der PFA-Halterung auf dem PTFE-Ring in einem Rettberggefäß senkrecht angeordnet und das Gefäß mit Argon gespült. Nacheinander werden dann 1,81 Toluol (wasserfrei) und 79 ml Glycidoxypropyltrimethoxysilan unter inerten Bedingungen zugegeben. Das Reaktionsgemisch wird im Ölbad auf 80°C erwärmt. Dabei wird der Ansatz durch Einleiten von Argon über zwei Titanfritten durchmischt. Nach Erreichen der Zieltemperatur wird diese für 3 h gehalten.

Nach Entfernen des Ölbads lässt man den Ansatz in etwa 40 min bis auf unter 60°C abkühlen, wobei weiter mit Argon durchmischt wird.

Nach Öffnen des Gefäßes wird der Wafer mit 1x Toluol, 3 x Methanol, 4 x Aceton und 1 x mit DI-Wasser gespült. Anschließend wird der Wafer auf einer Waferzentrifuge getrocknet.

### d) Modifizierung der Silanschichten

In einer Glasflasche werden 150 ml ACN vorgelegt und unter kräftigem Rühren 7,8 ml PEG200 und 5,1 ml Bisglycidyloxypropylmethan darin gelöst. Dann werden 1,044 ml konz. Schwefelsäure unter Rühren zugegeben und dieses Gemisch sofort weiterverwendet. Der epoxidierte Wafer wird in dieser Lösung für 35 min im Wasserbad bei 60°C inkubiert (ebenfalls unter Rühren). Danach wird er aus der Lösung genommen, 3 x mit Dimethylformamid, 2 x mit Aceton und 1x mit Ethanol gespült und in einer Zentrifuge getrocknet.

### e) DNA-Synthese auf der Waferoberfläche

Die DNA-Synthese wird an einem Syntheseautomaten Oligopilot OPII (Amersham Pharmacia, Freiburg, Deutschland) durchgeführt. Es findet eine aus Edelstahl gefertigte, kreisrunde Reaktionskartusche Verwendung, in die der Wafer eingeschraubt wird, so dass die Syntheseseite in den Reaktionsraum zeigt, während die entgegengesetzte Seite des Wafers außerhalb der Reaktionskartusche liegt.

Auf dem Chipwafer sind insgesamt 397 Array-Flächen in 21 Zeilen und 21 Reihen angeordnet. Die Synthese startet mit einer Reihe von Kupplungsschritten, bei denen die gleiche Base über den gesamten Wafer gekuppelt wird. Als Bausteine werden DMT-geschützte Phosphoamidite verwendet. Es werden nacheinander folgende Basen gekoppelt: C, C, C, T, A, T, T, C, G.

Nach Kupplung des letzen G werden DMT-Schutzgruppen ortsspezifisch entfernt. Zu diesem Zweck wird eine Maske verwendet. Die Maske verfügt über 21 identische Kanalbündel zu je vier parallelen Kanälen mit einer Breite von 128 µm und einem Abstand (Kanalmitte zu Kanalmitte) von 512 µm. Die Maske wird zunächst waagerecht ohne Verschiebung ausgerichtet.

Anschließend erfolgt das ortsspezifische Entfernen der DMT-Schutzgruppen, indem 10%ige wässrige Lösung von Oxalsäure mittels Vakuum durch die Kanäle gezogen wird. Die Entschützungszeit wird in den einzelnen Kanalbündeln folgendermaßen variiert:
Variante 1: 2 min
Variante 2: 5 min
Variante 3: 10 min
Variante 4: 20 min
Variante 5: 30 min

Anschließend werden die Kanäle mit Wasser gespült, die Maske abgehoben und der Chipwafer in die Synthesekartusche eingebaut. Die Kartusche wird am Syntheseautomaten prozessiert. Es folgt die Kupplung eines G ohne Entschützung in der Kartusche, so dass die Kupplung des G nur an den zuvor mit Oxalsäure entschützten Bereichen erfolgt.

Der Chipwafer wird wiederum aus der Kartusche ausgebaut. Es erfolgt eine erneute ortsspezifische Entschützung und die Kupplung eines weiteren G analog zum vorangegangenen Schritt, mit dem Unterschied, dass die Maske um 90° im Uhrzeigersinn gedreht ausgerichtet wird. Auch bei dieser Entschützung werden die Oxalsäure-Inkubationszeiten wie oben variiert.

Im Anschluss an diese Kupplung verbleibt der Chipwafer in der Kartusche. Es folgen weitere Kupplungsschritte über die gesamte Waferfläche in der folgenden Reihenfolge: A C C C T T T G. Nach dem letzten Kupplungsschritt wird der Wafer aus der Kartusche ausgebaut.

Zum Entfernen der permanenten Schutzgruppen von den Basen wird der Wafer in einem PFA-Schraubgefäß im Wasserbad für 35 min in 30-33% Ammoniak bei 55°C inkubiert, danach aus der Lösung genommen und wie folgt gespült:
1 x mit Ammoniak (28-30%)
1 x mit DI-Wasser
1 x mit VE-Wasser (fließend)
1 x mit DI-Wasser
1 x mit Ethanol

Anschließend wird in einer Waferzentrifuge für 60 s bei 3000 min⁻¹ trocken geschleudert.
Dann wird der Wafer auf einer Wafersäge in 397 Einzelchips von 3,4 x 3,4 mm Kantenlänge zerteilt.

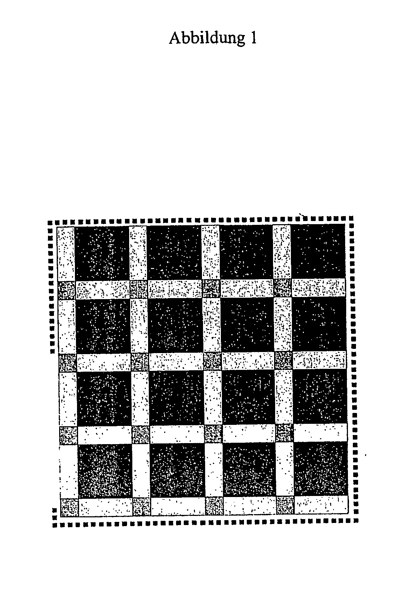

Unter der Annahme, dass die Entschützungs- und Kupplungsschritte vollständig verlaufen, entstehen bei der beschriebenen Verfahrensweise aus drei unterschiedlichen Sequenzen aufgebaute Arrays. Diese Sequenzen werden auf dem Array in jeweils definierten Regionen redundant nach dem in Abbildung 1 gezeigten Muster erzeugt.

Bei den Sequenzen handelt es sich um:
Matchsequenz (18mer): 3'CCCTATTCGGACCCTTTG 5' (helle Bereiche in Abbildung 1)
G-Deletion (17mer): 3'CCCTATTCGACCCTTTG5' (dunkle Bereiche in Abbildung 1)
G-Insertion (19mer): 3' CCCTATTCGGGACCCTTTG 5' (graue Bereiche in Abbildung 1)

### f) Hybridisierung

Das Hybridisierungstarget ist ein durch asymmetrische PCR-Amplifkation entstandenes DNA-Fragment aus dem 16s rRNA-Gen von *Corynebacterium glutamicum.* Dieses wird nach folgendem Protokoll hergestellt:

Es wird ein PCR-Ansatz mit folgender Zusammensetzung hergestellt:
1 x PCR-Reaktionspuffer (Eppendorf, Hamburg, Deutschland)
200 nM forward-Primer 16sfD1 Cy3, am 5'-Ende mit dem Fluoreszenzfarbstoff Cy3 (Amersham-Pharmacia, Freiburg, Deutschland)
66 nM reverse Primer 16s Ra (Sequenz: 5'
TACCGTCACCATAAGGCTTCGTCCCTA 3')
133 nM Kompetitor 16s Ra 3' NH₂
(Sequenz: 5'TACCGTCACCATAAGGCTTCGTCCCTA-NH₂ 3')

Die Aminomodifaktion am 3' Ende wird während der chemischen Synthese des Oligonukleotides in das Molekül integriert (3'-Amino-Modifier C7, Glen Research Corp., Sterling, VA, USA).
Sequenz: 5'AGAGTTTGATCCTGGCTCAG3')
200 µM dNTPs
0,05 unit/µl Taq-Polymerase (Eppendorf, Hamburg, Deutschland)
2 ng/µl chromosomale DNA *Corynebacterium glutamicum*

Das Gesamtvolumen jeder Reaktion beträgt 25 µl.

Die Reaktionen werden nach folgendem Temperaturregime durchgeführt:
Initiale Denaturierung für 2 min bei 95°C
danach
   25 Zyklen:
   30 sec 95°C
   30 sec 60°C
   30 sec 72°C
Terminale Elongation für 7 min bei 72°C

Das PCR-Fragment wird in einer Endkonzentration von etwa 5 nM in einem Hybridisierungspuffer (6 x SSPE/0,2% SDS) aufgenommen. Die Lösung wird in Aliquots mit einem Volumen von je 65 µl auf Eppendorf-Reaktionsgefäße (1,5 ml, Eppendorf, Hamburg, Deutschland) aufgeteilt. In jedes dieser Reaktionsgefäße wird ein Array gegeben. Insgesamt werden vier Arrays jeder Entschützungsvariante in parallelen Ansätzen mit dem Target hybridisiert.

Die Hybridisierungsansätze mit dem Array werden zunächst für 5 min bei 95°C inkubiert und danach sofort für 1 h bei 50°C inkubiert.

Im Anschluss werden die Chips jeweils 1 x für 5 min in 500 µl 2 x SSC/0,2%SDS, 2xSSC (jeweils bei 30°C) und 0,2x SSC (bei 20°C) in einem Thermoschüttler (Eppendorf, Hamburg, Deutschland) bei 500 rpm gewaschen. Nach dem Entfernen der letzten Spüllösung werden die Arrays im Vakuum getrocknet.
g) Detektion und Analyse der Hybridisierungssignale:

Die Detektion der Hybridisierungssignale erfolgt unter einem Zeiss-Fluoreszenzmikroskop (Zeiss, Jena, Deutschland). Die Anregung erfolgt im Auflicht mit einer Weißlichtquelle und einem für Cyanine 3 geeigneten Filtersatz. Die Signale werden mit einer CCD-Kamera (PCO-Sensicam, Kehlheim, Deutschland) aufgezeichnet. Die Belichtungszeit beträgt 5000 ms.

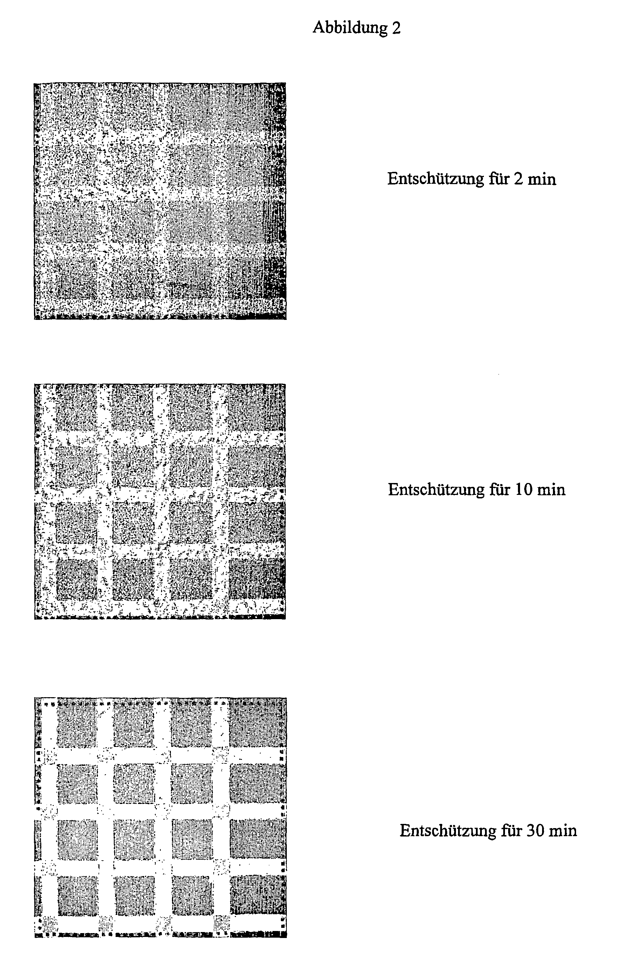

In Abbildung 2 sind die Aufnahmen für Entschützungszeiten von 2 min, 10 min und 30 min gezeigt.

Die Bildanalyse erfolgt mit der Bildauswertungssoftware Iconoclust (Clondiag, Jena, Deutschland). Zur Bestimmung der Lage und Orientierung der Arrays finden die zuvor aufgebrachten quadratischen 32 µm-Markenstrukturen aus Titan Verwendung.

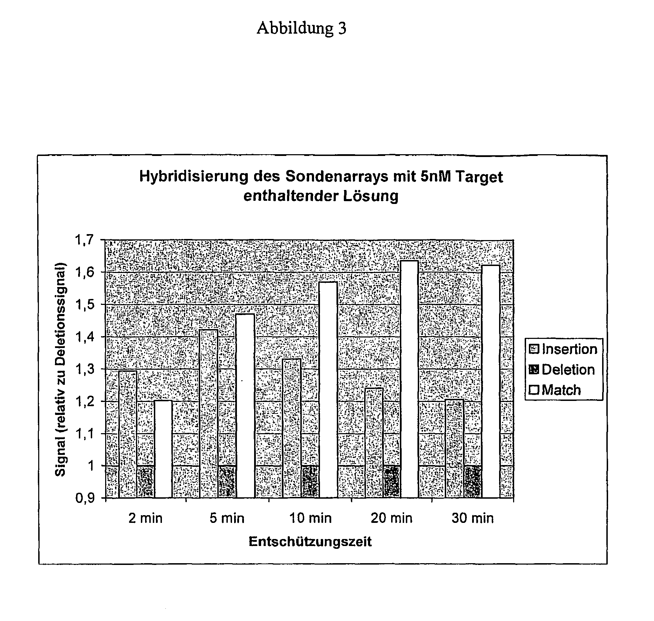

Die Ergebnisse sind in Abbildung 3 in Form eines Balkendiagramms dargestellt.
Es zeigt sich, dass das Hybridisierungssignal in den Bereichen, in denen bei vollständiger Kupplung die Matchsequenz erzeugt wird, mit der Verlängerung der Entschützungszeit von 2 auf 20 min steigt. Eine 30 minütige Entschützung bringt gegenüber einer 20 minütigen Entschützung keine weitere Verbesserung. In den Bereichen, in denen bei vollständiger Kupplung die G-Insertion erzeugt wird, wird zunächst ein Anstieg des Hybridisierungssignals bei Verlängerung der Entschützungszeit von 2 auf 5 min beobachtet. Danach fällt das Signal kontinuierlich ab. Eine optimale Diskriminierung zwischen Match und beiden Mutationen wird bei einer Entschützungszeit von mindestens 20 min erreicht.

### Beispiel 2: Einfluß der Belegungsdichte auf das Hybridisierungssignal

Das in diesem Beispiel eingesetzte Wafersubstrat sowie die Protokolle zur Reinigung, Strukturierung, Silanisierung und Herstellung der Syntheseschicht entsprechen denen von Beispiel 1.

### a) DNA-Synthese auf der Waferoberfläche:

Die DNA-Synthese wird an einem Syntheseautomaten Oligopilot OPII durchgeführt. Als Bausteine werden DMT-geschützte Phosphoamidite verwendet. Es findet eine kreisrunde, aus Edelstahl gefertigte Reaktionskartusche Verwendung, in die der Wafer eingeschraubt wird, so dass die Syntheseseite in den Reaktionsraum zeigt, während die entgegengesetzte Seite des Wafers außerhalb der Reaktionskartusche liegt. Diese Kartusche wird fluidisch mit dem Syntheseautomaten verbunden.

Die Synthese startet mit einem Kupplungsschritt, bei dem die gleiche Base (T) über den gesamten Wafer gekoppelt wird.

Anschließend werden die reaktiven Gruppen auf der Oberfläche ortsspezifisch in unterschiedlichem Maße geblockt. Zu diesem Zweck wird die Oberfläche zunächst unter Verwendung einer Maske ortsspezifisch entschützt, d.h. es werden die DMT-Schutzgruppen entfernt. Anschliessend wird ein definiertes Gemisch aus Fluorprime-Amidit und einem Basen-Amidit gekoppelt. Das Fluorprime-Amidit blockiert die weitere Synthese, da es keine funktionellen Gruppen aufweist, an die weitere Basen gekoppelt werden können.

Die für die Entschützung verwendeten fluidische Maske verfügt über 21 identische Kanalbündel zu je vier parallelen Kanälen mit einer Breite von 128 µm und einem Abstand (Kanalmitte zu Kanalmitte) von 512 µm. Die Maske wird zunächst waagerecht ohne Verschiebung ausgerichtet. Anschließend erfolgt das ortsspezifische Entfernen der DMT-Schutzgruppen, indem eine Lösung von 10% Oxalsäure in Wasser mittels Vakuum durch die Kanäle gezogen wird. Die Entschützungszeit beträgt 20 min.

Anschließend werden die Kanäle mit Wasser gespült, die Maske abgehoben und der Chipwafer in die Synthesekartusche montiert und die Kartusche mit dem Syntheseautomaten verbunden. Es erfolgt die Kupplung eines Gemisches aus 50% T-Amidit und 50% Fluorprime-Amidit. Die Gesamt-Amiditkonzentration beträt 0,1 M.

Nach dem gleichen Prinzip werden sieben weitere Syntheseschritte (Schritte 2-8) mit geänderten Parametern durchgerührt. Die verwendete Maske, die Gesamt-Amiditkonzentration, die Entschützungszeit und das Kupplungsprotokoll sind identisch. Die folgende Tabelle gibt einen Überblick über die in den Kupplungsschritten variierten Parameter:

**Tabelle 1**

| Schritt Fluorprime | Drehung | Verschiebung | % T-Amidit | % |
|---|---|---|---|---|
| 1 | 0° | 0 µm | 50 | 50 |
| 2 | 0° | 128 µm | 10 | 90 |
| 3 | 0° | 256 µm | 100 | 0 |
| 4 | 0° | 384 µm | 0 | 100 |
| 5 | 90° | 0 µm | 50 | 50 |
| 6 | 90° | 128 µm | 10 | 90 |
| 7 | 90° | 256 µm | 100 | 0 |
| 8 | 90° | 384 µm | 0 | 100 |

Durch die beschriebenen Kupplungsschritte wird die Zahl der für die weitere Synthese zur Verfügung stehenden aktiven Gruppen auf der Oberfläche in den verschiedenen Array-Elementen in unterschiedlichem Maße reduziert. Unter der Annahme, dass die Kupplungen quantitativ ablaufen, werden Array-Elemente mit 100%, 50%, 25%, 10%, 5% und 0% der ursprünglichen Dichte an funktionellen Gruppen, die für die weitere Synthese zur Verfügung stehen, erzeugt.

Im weiteren Verlauf der Synthese wird der Wafer in die Reaktionskartusche montiert und diese mit dem Syntheseautomaten (Äkta, Amersham-Pharmacia, Freiburg, Deutschland) verbunden. Es werden folgende Basen über die gesamte in die Reaktionskartusche weisende Fläche des Wafers gekoppelt: T,C, C, C, T, A, T, T, C, G,G.

Nach Kupplung des letzten G werden DMT-Schutzgruppen ortsspezifisch entfernt. Zu diesem Zweck wird wie oben beschrieben eine fluidische Maske verwendet, die eine Hälfte jedes Array-Elementes abdeckt und die andere Hälfte dem Entschützungsreagenz aussetzt. Die Entschützung erfolgt mit 10%iger Oxalsäure in Wasser für 20 min.

Anschließend werden die Kanäle mit Wasser gespült, die Maske abgehoben und der Chipwafer in die Synthesekartusche montiert und die Kartusche mit dem Syntheseautomaten verbunden. Es erfolgt die Kupplung eines A in den entschützten Bereichen. Dadurch entsteht in diesen Bereichen im weiteren Verlauf der Synthese eine zum später verwendeten Hybridisierungstarget perfekt komplementäre Sequenz, während in den übrigen Bereichen eine Sequenz mit einer 1-Basen-Deletion erzeugt wird.

Die weitere Synthese erfolgt in der Reaktionskartusche wie oben beschrieben über den gesamten in die Reaktionskartusche weisenden Bereich des Wafers. Es werden nacheinander folgende Basen gekoppelt: C, C, C, T, T, T, G.

Nach dem letzten Kupplungsschritt wird der Wafer aus der Kartusche ausgebaut. Zum Entfernen der permanenten Schutzgruppen wird der Wafer in einem PFA-Schraubgefäß im Wasserbad für 35 min in 30-33% Ammoniak bei 55°C inkubiert, danach aus der Lösung genommen und wie folgt gespült:
1x mit Ammoniak (28-30%)
1x mit DI-Wasser
1x mit VE-Wasser (fließend)
1x mit DI-Wasser
1x mit-Ethanol

Abschließend wird der Wafer in einer Waferzentrifuge für 60 s bei 3000 min⁻¹ trocken geschleudert und auf einer Wafersäge in 397 Einzelchips von 3,4 x 3,4 mm Kantenlänge zerteilt.

### b) Hybridisierung

Das Hybridisierungstarget ist ein mit dem Farbstoff Cy3 markiertes Oligonukleotid von 18 Basen Länge mit der folgenden Sequenz: 5' Cy3-GGGATAAGCCTGGGAAAC-3'.

Das Oligonukleotid wird in einer Endkonzentration von 10 nM im Hybridisierungspuffer (6 x SSPE/0,2% SDS) aufgenommen. Die Lösung wird in Aliquote mit einem Volumen von je 65 µl auf Eppendorf Reaktionsgefäße (1,5ml, Eppendorf, Hamburg, Deutschland) aufgeteilt. In jedes dieser Reaktionsgefäße wird ein Array gegeben. Insgesamt werden zehn Arrays in parallelen Ansätzen mit dem Target hybridisiert.

Die Hybridisierungsansätze mit dem Array wurden zunächst für 5 min bei 95°C inkubiert und danach sofort für 1 h bei 50°C inkubiert.

Im Anschluss werden die Chips jeweils 1 x für 5 min in 500 µl 2xSSC/0,2%SDS, 2xSSC (jeweils bei 30°C) und 0,2x SSC (bei 20°C) in einem Thermoschüttler (Eppendorf, Hamburg, Deutschland) bei 500 rpm gewaschen. Nach dem Entfernen der letzten Spüllösung werden die Arrays im Vakuum getrocknet.

### c) Detektion und Analyse der Hybridisierungssignale

Die Detektion der Hybridisierungssignale erfolgt unter einem Zeiss-Fluoreszenzmikroskop (Zeiss, Jena, Deutschland). Die Anregung erfolgt im Auflicht mit einer Weißlichtquelle und einem für Cyanine 3 geeigneten Filtersatz. Die Signale werden mit einer CCD-Kamera (PCO-Sensicam, Kehlheim, Deutschland) aufgezeichnet. Die Belichtungszeit beträgt 5000 ms.

Die Bildanalyse erfolgt mit der Bildauswertungssoftware Iconoclust (Clondiag, Jena, Deutschland). Zur Bestimmung der Lage und Orientierung der Arrays finden die zuvor aufgebrachten quadratischen 32 µm-Markenstrukturen aus Titan Verwendung.

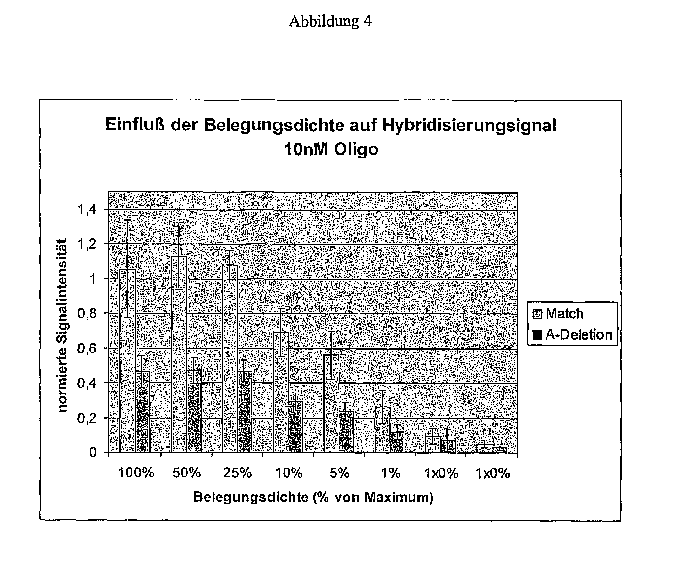

Die Ergebnisse sind in Abbildung 4 in Form eines Balkendiagramms dargestellt. In den Bereichen mit einer theoretischen Belegungsdichte von 100, 50 und 25% der maximalen Belegung wird das gleiche Hybridisierungssignal gemessen. Offensichtlich wird die Hybridisierung in diesem Dichtebereich nicht durch die Menge der Sonden auf der Oberfläche limitiert. Unterhalb 25% Belegungsdichte nimmt das Hybridisierungssignal kontinuierlich ab.

### Beispiel 3: Einfluss der Kettenlänge auf das Hybridisierungssignal

Das in diesem Beispiel eingesetzte Wafersubstrat sowie die Protokolle zur Reinigung, Strukturierung, Silanisierung und Herstellung der Syntheseschicht entsprechen denen von Beispiel 1.

### a) DNA-Synthese auf der Waferoberfläche:

Die DNA-Synthese wird an einem Syntheseautomaten Oligopilot OPII durchgeführt. Als Bausteine werden DMT-geschützte Phosphoamidite verwendet. Es findet eine kreisrunde, aus Edelstahl gefertigte Reaktionskartusche Verwendung, in die der Wafer eingeschraubt wird, so dass die Syntheseseite in den Reaktionsraum zeigt, während die entgegengesetzte Seite des Wafers außerhalb der Reaktionskartusche liegt. Diese Kartusche wird fluidisch mit dem Syntheseautomaten verbunden.

Die Synthese startet mit einem Kupplungsschritt, bei dem die gleiche Base (T) über den gesamten Wafer gekoppelt wird.

Die folgenden Kupplungsschritte erfolgen ortsspezifisch. Zu diesem Zweck wird die Oberfläche zunächst unter Verwendung einer Maske ortsspezifisch entschützt, d.h. es werden die DMT-Schutzgruppen entfernt. Die für die Entschützung verwendete fluidische Maske umfasst 21 identische Kanäle mit einer Breite von 1024 µm, Der Abstand der Kanäle zueinander (Kanalmitte zu Kanalmitte) entspricht dem Rastermaß des Wafers (Chipmitte zu Chipmitte).

Die Maske wird zunächst waagerecht ohne Verschiebung ausgerichtet. Anschließend erfolgt das ortsspezifische Entfernen der DMT-Schutzgruppen, indem eine Lösung von 10% Oxalsäure in Wasser mittels Vakuum durch die Kanäle gezogen wird. Die Entschützungszeit beträgt 20 min.

Anschließend werden die Kanäle mit Wasser gespült, die Maske abgehoben und der Chipwafer in die Synthesekartusche montiert und die Kartusche mit dem Syntheseautomaten verbunden. Es erfolgt die Kupplung eines T-Amidits. Die Amiditkonzentration beträt 0,1 M.

Nach dem gleichen Prinzip werden sieben weitere Syntheseschritte (Schritte 2-16) mit geänderten Parametern durchgeführt. Die verwendete Maske, die Gesamt-Amiditkonzentration, die Entschützungszeit und das Kupplungsprotokoll sind identisch. Die folgende Tabelle gibt einen Überblick über die in den Kupplungsschritten variierten Parameter:

**Tabelle 2**

| Schritt | Drehung | Verschiebung | Amidit |
|---|---|---|---|
| 1 | 0° | 0 µm | dT |
| 2 | 0° | 128 µm | dT |
| 3 | 0° | 256 µm | dT |
| 4 | 0° | 384 µm | dT |
| 5 | 0° | 512 µm | dT |
| 6 | 0° | 640 µm | dT |
| 7 | 0° | 768 µm | dT |
| 8 | 0° | 896 µm | dT |
| 9 | 90° | 0 µm | dT |
| 10 | 90° | 128 µm | dT |
| 11 | 90° | 256 µm | dT |
| 12 | 90° | 384 µm | dT |
| 13 | 90° | 512 µm | dT |
| 14 | 90° | 640 µm | dT |
| 15 | 90° | 768 µm | dT |
| 16 | 90° | 896 µm | dT |

Durch die beschriebenen Kupplungsschritte werden Arrays erzeugt, bei denen die verschiedenen Array-Elemente einer unterschiedlichen Anzahl an Kupplungsschritten unterzogen wurden, wodurch T-Oligomere mit unterschiedlichen Kettenlängen erzeugt wurden.

Im weiteren Verlauf der Synthese wird der Wafer in die Reaktionskartusche montiert und diese mit dem Syntheseautomaten (Äkta, Amersham-Pharmacia, Freiburg, Deutschland) verbunden. Es werden folgende Basen über die gesamte in die Reaktionskartusche weisende Fläche des Wafers gekuppelt: T, C, C, C, T, A, T, T, C, G,G.

Nach Kupplung des letzten G werden DMT-Schutzgruppen ortsspezifisch entfernt. Zu diesem Zweck wird wie oben beschrieben eine fluidische Maske verwendet, die 21 identische Kanalbündel zu je acht parallelen Kanälen mit einer Breite von 128 µm und einem Abstand (Kanalmitte zu Kanalmitte) von 256 µm umfasst. Die Maske wird senkrecht (Drehung um 90°) mit einer Verschiebung von 64 µm ausgerichtet. Dadurch wird je eine Hälfte jedes mit T-Oligomeren einer bestimmten Kettenlänge belegten Array-Elementes abgedeckt und die andere Hälfte dem Entschützungsreagenz ausgesetzt. Die Entschützung erfolgt mit 10%iger Oxalsäure in Wasser für 20 min.

Anschließend werden die Kanäle mit Wasser gespült, die Maske abgehoben, der Chipwafer in die Synthesekartusche montiert und die Kartusche mit dem Syntheseautomaten verbunden. Es erfolgt die Kupplung eines A in den entschützten Bereichen. Dadurch entsteht in diesen Bereichen im weiteren Verlauf der Synthese eine zum später verwendeten Hybridisierungstarget perfekt komplementäre Sequenz, während in den übrigen Bereichen eine Sequenz mit einer 1-Basen-Deletion erzeugt wird.

Die weitere Synthese erfolgt in der Reaktionskartusche wie oben beschrieben über den gesamten in die Reaktionskartusche weisenden Bereich des Wafers. Es werden nacheinander folgende Basen gekoppelt: C, C, C, T, T, T, G.

Nach dem letzten Kupplungsschritt wird der Wafer aus der Kartusche ausgebaut. Zum Entfernen der permanenten Schutzgruppen wird der Wafer in einem PFA-Schraubgefäß im Wasserbad für 35 min in 30-33% Ammoniak bei 55°C inkubiert, danach aus der Lösung genommen und wie folgt gespült:
1 x mit Ammoniak (28-30%)
1 x mit DI-Wasser
1 x mit VE-Wasser (fließend)
1 x mit DI-Wasser
1 x mit Ethanol

Abschließend wird der Wafer in einer Waferzentrifuge für 60 s bei 3000 min⁻¹ trocken geschleudert und auf einer Wafersäge in 397 Einzelchips von 3,4 x 3,4 mm Kantenlänge zerteilt.

### b) Hybridisierung

Als Hybridisierungstarget wird entweder ein mit dem Farbstoff Cy3 markiertes Oligonukleotid von 18 Basen Länge mit der folgenden Sequenz: 5' Cy3-GGGATAAGCCTGGGAAAC-3'oder das im Ausführungsbeispiel 1 beschriebene PCR-Fragment verwendet.

Das Oligonukleotid wird in einer Endkonzentration von 10 nM und das PCR-Produkt in einer Endkonzentration von ca. 5 nM im Hybridisierungspuffer (6x SSPE/0,2% SDS) aufgenommen. Die Lösung wird in Aliquote mit einem Volumen von je 65 µl auf Eppendorf-Reaktionsgefäße (1,5 ml, Eppendorf, Hamburg, Deutschland) aufgeteilt. In jedes dieser Reaktionsgefäße wird ein Array gegeben. Insgesamt werden zehn Arrays in parallelen Ansätzen mit dem Target hybridisiert.

Die Hybridisierungsansätze mit dem Array wurden zunächst für 5 min bei 95°C inkubiert und danach sofort für 1 h bei 50°C inkubiert.

Im Anschluss werden die Chips jeweils 1 x für 5 min in 500 µl 2xSSC/0,2%SDS, 2xSSC (jeweils bei 30°C) und 0,2x SSC (bei 20°C) in einem Thermoschüttler (Eppendorf, Hamburg, Deutschland) bei 500 rpm gewaschen. Nach dem Entfernen der letzten Spüllösung werden die Arrays im Vakuum getrocknet.

### c) Detektion und Analyse der Hybridisierungssignale

Die Detektion der Hybridisierungssignale erfolgt in einem konfokalen Slidereader (Scanarray 4000, Packard Biochip Technologies, Billerica, MA, USA) ausgelesen. Die Arrays werden in einen Adapter eingelegt, der außen die Abmaße eines Slides aufwies. Die Anregung erfolgt durch den für die Detektion des Farbstoffes Cy3 im Gerät vorgesehenen Laser. Die Einstellungen von Laserleistung und Photomultiplier werden so gewählt, dass die Signale nicht das Sättigungsniveau erreichen.

Die Bildanalyse erfolgt mit der Bildauswertungssoftware Iconoclust (Clondiag, Jena, Deutschland). Zur Bestimmung der Lage und Orientierung der Arrays finden die zuvor aufgebrachten quadratischen 32 µm-Markenstrukturen aus Titan Verwendung.

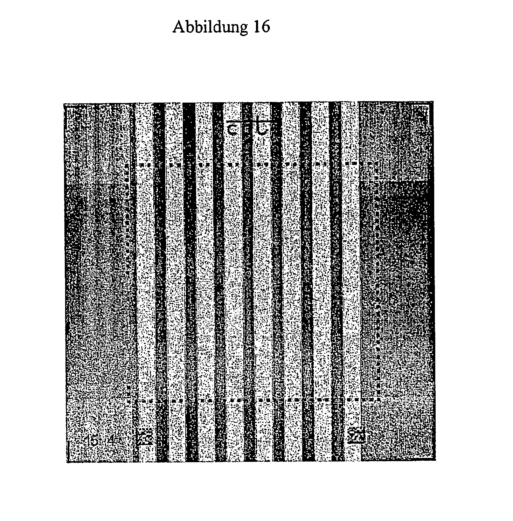

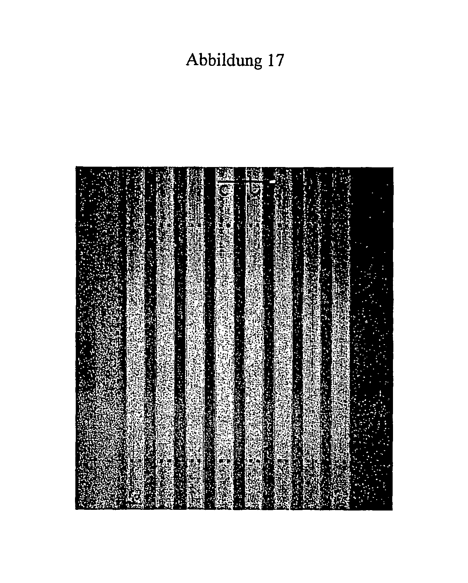

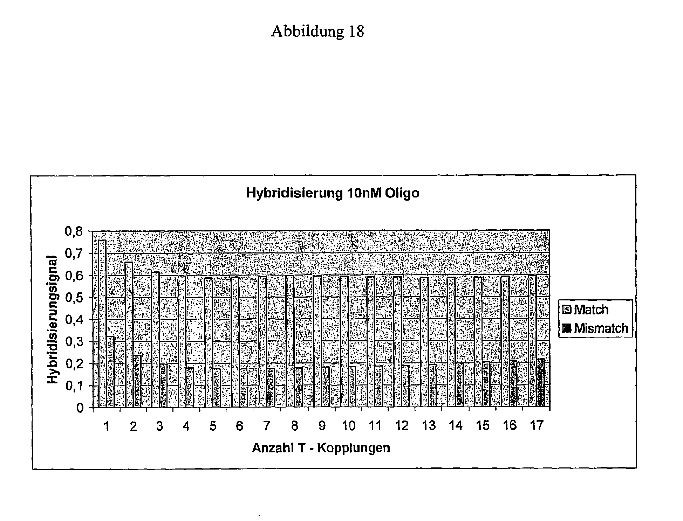

Die Ergebnisse sind in den Abbildungen 16 bis 19 dargestellt. Abbildung 16 und 17 zeigen die Aufnahme eines Arrays nach Hybridisierung mit dem beschriebenen Oligonukleotid (Abb. 16) bzw. PCR-Fragment (Abb. 17). Die zusammengefassten Ergebnisse von Hybridisierungsexperimenten mit dem Oligonukleotid bzw. PCR-Fragment als Target sind in den Balkendiagrammen in Abbildungen 18 (Oligonukleotid) bzw. 19 (PCR-Fragment) zusammengefasst.

Die Ergebnisse der Oligohybridisierung zeigen, dass das beobachtete Hybridisierungssignal durch die Anzahl der T-Kopplungen, die vor der Synthese der zum Target komplementären Sequenz erfolgten, im Wesentlichen nicht beeinflusst wird.

Bei der Hybridisierung mit dem PCR-Produkt, welches eine größere Kettenlänge aufweist als das Oligonukleotid, steigt das Hybridisierungssignal kontinuierlich mit der Anzahl der T-Kopplungen, die vor der Synthese des zum Target komplementären Bereiches der Sonde erfolgen.

### Beispiel 4: Modifizierung eines Glaswafers für die DNA Synthese

### a) Wafersubstrat

Es findet ein Glaswafer (BF 33 Glas, Schott) mit 0,7 mm Dicke Verwendung.

### b) Reinigung und Strukturierung

Die Reinigung des Wafers erfolgt analog des Protokolls des Ausführungsbeispiels 1. Auf den gereinigten Wafer wird durch Sputtern eine NiCr-Schicht von ca. 100 nm Dicke aufgebracht. Die NiCr-Schicht wird mittels Positivlack AZ 1514 H und Belichtung durch eine entsprechende Maske strukturiert. Nach der Strukturierung mittels NiCr-Ätzbad, einer Mischung aus Ammoniumcer-IV-nitrat und Perchlorat in Wasser ist die aktive Fläche jedes Arrays (ca. 2 mm) von einer unterbrochenen Kette von quadratischen NiCr-Strukturen mit 32 µm Kantenlänge umgeben. Von der übrigen Waferfläche wird die NiCr Legierung vollständig entfernt. Der Photoresist wird mittels ALEG 625 (Mallinckrodt Baker, Griesheim, Deutschland) entfernt.

Der Wafer wird kurz mit Di-Wasser benetzt und dann im vortemperierten Wasserbad (55°C) mit 5 M Natronlauge bei 50 °C für 30 s angeätzt. Anschließend wird in folgender Reihenfolge gespült: - 6 x VE-Wasser (je 1 min, Wafer in Halterung bewegen) - 2 x 5 min Di-Wasser Zum Abschluss wird der Wafer trocken geschleudert und bei 150 °C für 1h im Umlufttrockenschrank temperiert.

### c) Silanisierung

Die Silanisierung des Wafers erfolgt analog zum Ausführungsbeispiel 1.

### d) Herstellung der Syntheseschicht durch Modifizierung der Silanschichten

In einem PE Becher wird der silanisierte Wafer sowie 150 mL H₂O vorgelegt. Dann werden 1,044 mL konz. Schwefelsäure unter Rühren zugegeben und dieses Gemisch 35 min lang auf 35 °C temperiert. Anschließend wird der Wafer aus dieser Lösung entnommen und mit vollentsalztem Wasser mehrmals abgespült. Abschließend wird der Wafer mit Ethanol gespült und in einer Zentrifuge bei 3000 rpm 60 s getrocknet.

### e) DNA-Synthese auf der Waferoberfläche

Die DNA-Synthese wird an einem Syntheseautomaten Äkta (Amersham Pharmacia, Freiburg, Deutschland) durchgeführt. Im Unterschied zu dem Ausführungsbeispiels 1 wird eine aus PEEK gefertigte Reaktionskartusche verwendet.

Die Synthese startet mit einem Kopplungsschritt, bei dem das Nucleotid Cytidin auf dem gesamten Wafer gekoppelt wurde. Nach fünf weiteren Kuppungsschritten mit den Amiditbausteinen C, C, T, A und T auf dem gesamten Wafer wird anschließend die temporäre DMT-Schutzgruppe mittels einer Maske und einer 10%igen wässrigen Lösung von Methansulfonsäure ortsspezifisch abgespaltet.

Die für die Entschützung zu verwendende fluidische Maske verfügt über 21 Kanäle mit einer Breite von 2048 µm, die sich durch ein verschiedenartiges Muster von Inseln, d.h. Bereiche die durch die Maske abgedeckt werden, unterscheiden. Nach einer Reaktionszeit von 5 min werden die Kanäle mit Wasser gespült, die Maske abgehoben und der Chipwafer in die Synthesekartusche montiert und die Kartusche mit dem Syntheseautomaten verbunden. Es werden 3 Syntheseschritte mit den Bausteinen T, C und G durchgeführt, ohne die Maske jeweils zu verschieben.

Abschließend werden die Amidite G, A, C, C, C, T, T, T und G jeweils auf dem ganzen Wafer gekoppelt. Nach dem letzten Kopplungsschritt wird der Wafer aus der Kartusche ausgebaut und in eine mit 30-33% Ammoniak gefüllte Edelstahlkartusche überführt. Nach einer 35 minütigen Inkubation bei 55°C wird der Wafer entnommen und mit folgenden Lösungen gespült:
1 x mit Spülammoniak (28-30%)
1 x mit DI-Wasser
1 x mit VE-Wasser (fließend)
1 x mit DI-Wasser
1 x mit Ethanol

Abschließend wird der Wafer in einer Waferzentrifuge für 60 s bei 3000 min⁻¹ trocken geschleudert und auf einer Wafersäge in 397 Einzelchips von 3,4 x 3,4 mm Kantenlänge zerteilt.

### f) Hybridisierung

Target: Hybridisierungstarget ist ein mit dem Farbstoff Cy3 markiertes Oligonukleotid von 18 Basen Länge mit der Sequenz 5' Cy3-GGGATAAGCCTGGGAAAC-3'.

Das Protokoll der Hybridisierung sowie die Detektion der Hybridiserungssignale wird analog dem Ausführungsbeispiel 1 durchgeführt. Die Belichtungszeit der Chips beträgt 6000 ms.

Auf den Chips werden zwei verschiedene DNA-Oligomere mit den Sequenzen 3' CCCTATTCGGACCCTTT 5' (18 mer) und 3' CCCTATGACCCTTT 5' (15 mer) aufgebaut. Die entsprechende Deletionssequenz befindet sich an den Orten, die durch die Maskenstempel abgedeckt worden sind und die als dunkle Flächen zu sehen sind. Die Matchsequenz befindet sich auf der restlichen Fläche des Chips.

### Beispiel 5: Bestimmung der Syntheseschrittausbeute unter Verwendung von wäßrigen Entschützungsreagenzien

In diesem Beispiel wird mittels Festphasensynthese an CPG-Trägermaterial eine DNA mit der Sequenz 3'-TCAAAGGGTCCGAATAGGG-5' aufgebaut. Hierfür wird ein Expedite 8905-Syntheszier der Firma PerSeptive Biosystems verwendet. Die Ermittlung der Syntheseausbeute erfolgt durch die dem Fachmann bekannte Methode der UV-metrischen Messung der Dimethoxytritylkationen.

Zum Vergleich der Synthesemethoden wird zum Einen die oben genannte Sequenz im Maßstab von 0,2 µmol mittels Standardprotokoll unter Verwendung von Trichloressigsäure (TCA) in Acetonitril aufgebaut und zum Anderen die gleiche Sequenz parallel in Abwandlung zum Standardprotokoll mit Hilfe des Entschützungsreagenzes 10% wässrige Methansulfonsäure (MSA) synthetisiert. Hierfür wird nach jedem erfolgten Syntheseschritt die Synthesekartusche aus dem Synthesizer entnommen, mit 0,5 mL 10% MSA-Lösung gespült und dann mit weiteren 0,5 mL 10% MSA für 5 Minuten zur Reaktion gebracht. Im Anschluss wird die Synthesekartusche mit 6 x 1 mL H₂O gespült und mit Luft durchgeblasen. Nach 3 x Spülen mit je 1 mL Acetonitril wird das Trägermaterial unter Verwendung von trockenem Argon 10 Minuten getrocknet. Nachdem erneuten Einbau in den DNA-Syntheszier wird vor dem Fortsetzen des Synthesezyklus die Kartusche 3 x mit 1 mL Acetonitril gespült.

Um eine Aussage zur Kupplungseffizienz zu machen, wird jeweils nach dem 2. und 11. Syntheseschritt bei beiden Kartuschen die Entschützung mit je 1 mL einer 0,1 M p-Toluolsulfonsäure Lösung in Acetonitril durchgeführt. Nach der Entschützung wird die Entschützungsreagenzlösung mit 0,1 M p-Toluolsulfonsäure in Acetonitril im Verhältnis 1:40 verdünnt und photometrisch in einem UV-Gerät (Perkin Elmer Lambda 40) in einer Küvette mit 1,0 cm Strahlengang bei einer Wellenlänge von 498 nm (ε₄₉₈ = 70 000) vermessen.

Aus den gemessenen UV-Absorptionen werden die durchschnittlichen Syntheseschritt-Ausbeuten bei der Standardsynthese zu 98,4 % und im Falle der modifizierten Synthese zu 98,3 % bestimmt.

### Beispiel 6: Peptidsynthese auf Glaswafer

Im Folgenden wird eine Arbeitsanweisung zur Peptidsynthese auf einem Glaswafer bereitgestellt.

Auf einem Chipwafer sind insgesamt 397 Array-Flächen in 21 Zeilen und 21 Reihen angeordnet. Die Glaswafer werden in Analogie zum Ausführungsbeispiel 1 dem Standardprozess der Glasreinigung und Strukturierung unterworfen. Die nachfolgende Silanisierung wird bei gleichen Reaktionsbedingungen wie im Beispiel 1 mit einer 5.3 % (v/v) Lösung von 3-Aminopropyloxysilan in Toluol durchgeführt. Die silanisierten Wafer weisen einen Randwinkel von ca. 50° auf.

Die Wafer werden anschließend einzeln in einer aus PEEK gefertigten Synthesekartusche zur Reaktion gebracht. Zu erst wird als Linker-Molekül Boc-Glycin-OH auf dem Wafer gekuppelt. Hierfür wird eine Lösung aus 0,1 M Boc-Gly-OH in Dimethylformamid (DMF) und 0,1 M O-Benzotriazolyl-N,N,N',N'-tetramethyluroniumtetrafluoroborat (TBTU) sowie 0,12 M Hydroxybezotriazol (HOBt) gemäß der HOBt/TBTU Methode nach Knorr et al. (R. Knorr, A. Trzeciak, W. Bannwarth, D. Gillesen, Tetrahedron Lett. 1989, 30, 2340-2349) verwendet. Anschließend wird durch Zugabe der Base N,N-Diisopropylethylamin (DIPEA) der pH-Wert auf 8,5 eingestellt und die Reaktionskartusche leicht geschüttelt. Nach 60 min wird der Wafer aus der Synthesekartusche entnommen und mit je 10 mL 2 x DMF und 2 x DMF:Dichlormethan (DCM) 1:1 gespült.

Basierend auf dieser Syntheseschicht erfolgen die weiteren Synthesezyklen zum Aufbau der Peptide. Generell werden analog zur etablierten Festphasensynthese von Peptiden Seitenketten geschützte Aminosäuren verwendet. Hierbei werden die Schutzgruppen so gewählt, dass diese möglichst mild und möglichst ohne Metallvermittelte Katalyse am Ende der Synthese abgespalten werden können. Als temporäre Schutzgruppe dient tert.-Butyloxycarbonylgruppe.

In einem ersten Schritt wird eine erfindungsgemäße Kanalmaske auf dem Wafer orientiert und 10 %ige wässrige Methansulfonsäure durch die Kanäle des Verbundes aus Wafer und Kanalmaske gezogen. Nach 10 min werden die Kanäle mit H₂O gespült und die Maske vom Wafer abgehoben. Der Wafer wird mit Acetonitril gespült und getrocknet. Nach dem Einbau des Wafers in die Synthesekartusche wird dieser mit der nächsten Aminosäurekupplungs-lösung (siehe oben) bedeckt und zur Reaktion gebracht. Nach vollständiger Synthese werden die temporären sowie permanenten Schutzgruppen entfernt. Die Protokolle hierfür sind dem Fachmann bekannt.

### Abbildungen

Abbildung 1: Darstellung des in Beispiel 1 verwendeten Arrays.
Matchsequenz (18mer): 3' CCCTATTCGGACCCTTTG 5' (helle Bereiche in Abbildung 1)
G-Deletion (17mer): 3' CCCTATTCGACCCTTTG5' (dunkle Bereiche in Abbildung 1)
G-Insertion (19mer): 3' CCCTATTCGGGACCCTTTG 5' (graue Bereiche in Abbildung 1)

Abbildung 2: Aufnahme der Hybridisierungssignale gemäß Beispiel 1 für Entschützungszeiten von 2 min, 10 min und 30 min.

Abbildung 3: Darstellung der Abhängigkeit des Hybridisierungssignals von der Entschützungszeit.

Abbildung 4: Darstellung der Abhängigkeit des Hybridisierungssignals von der Belegungsdichte des Arrays.

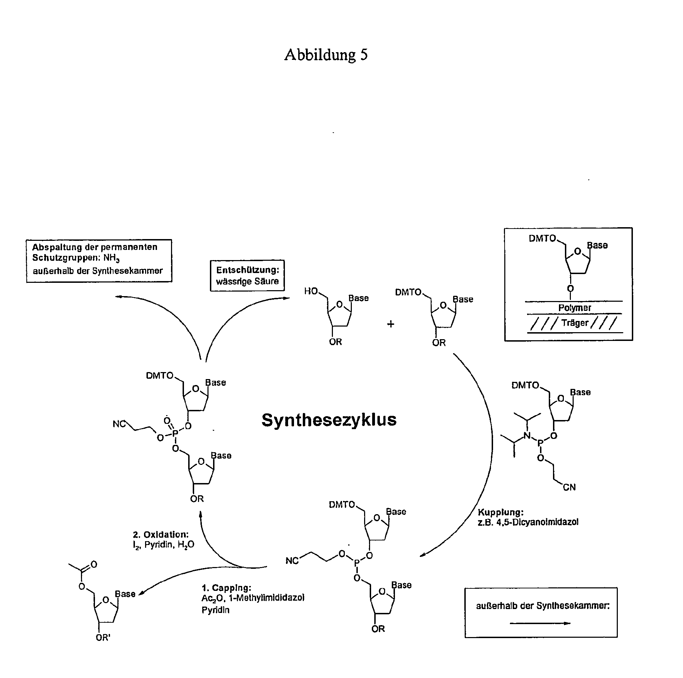

Abbildung 5: Schematische Darstellung des Synthesezyklus.

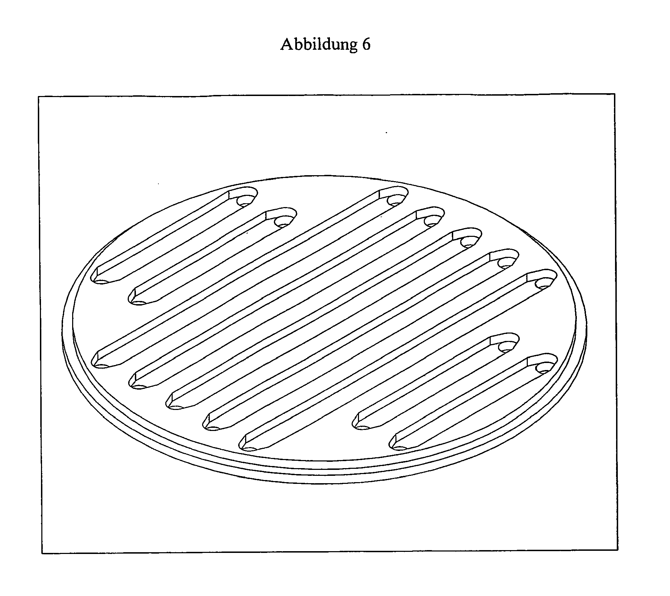

Abbildung 6: Darstellung einer Ausgestaltung der Maske.

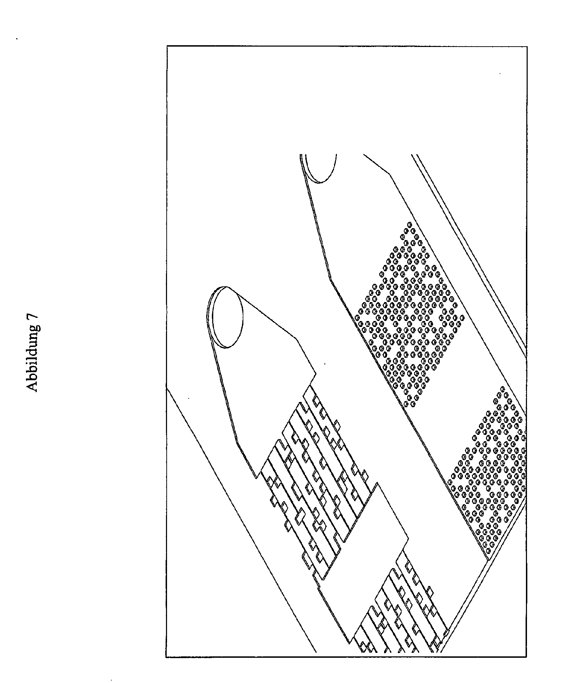

Abbildung 7: Vergrößerung eines Ausschnitts einer Maske.

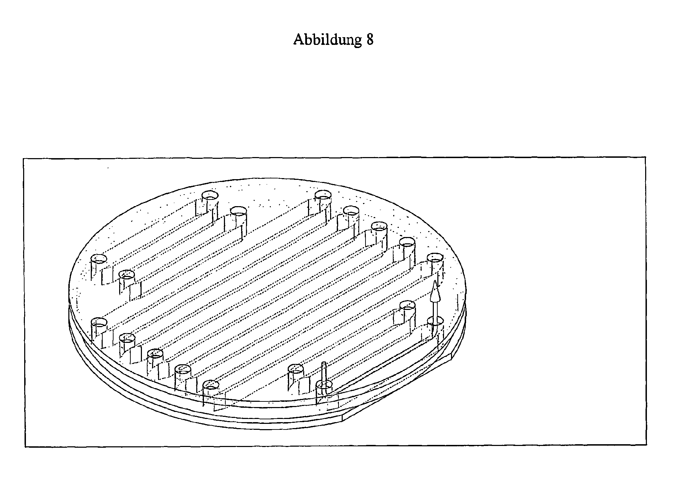

Abbildung 8: Darstellung eines Verbunds aus Maske und Träger.

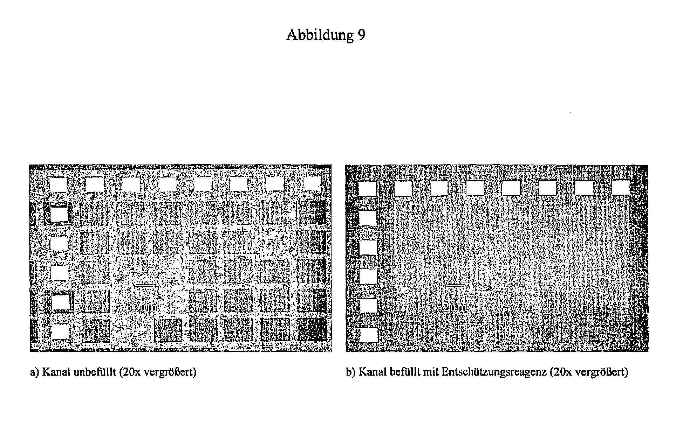

Abbildung 9: Schematische Darstellung des Verbundes aus Maske und Träger (a: leer, b: befüllt).

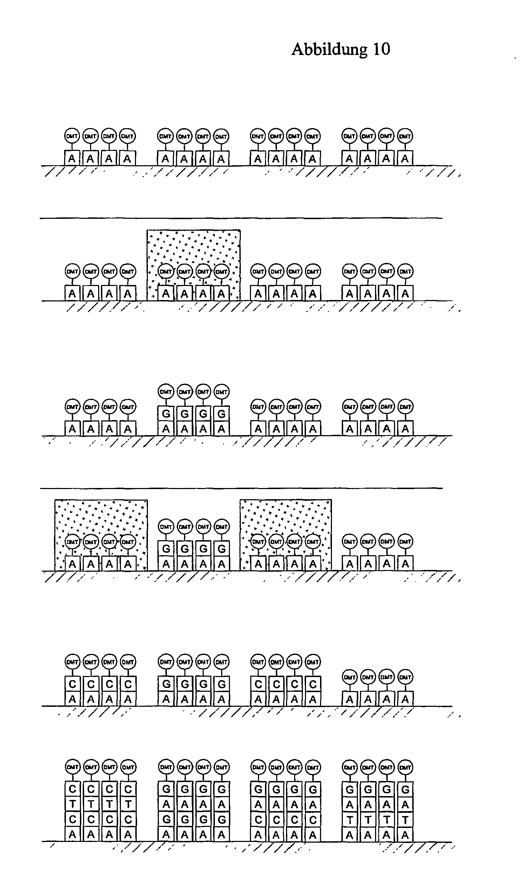

Abbildung 10: Schematische Darstellung des Prinzips der selektiven Entschützung.

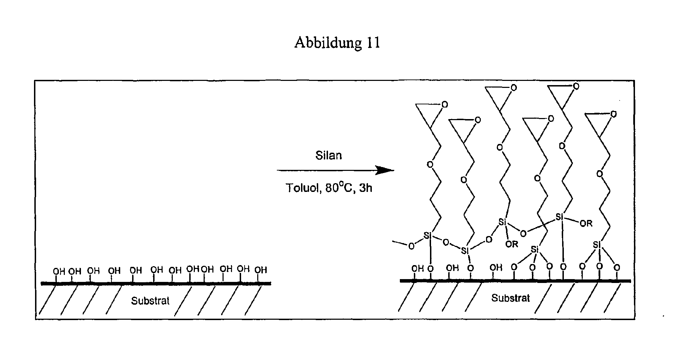

Abbildung 11: Reaktionsschema zur Aufbringung einer Silanschicht auf dem Träger.

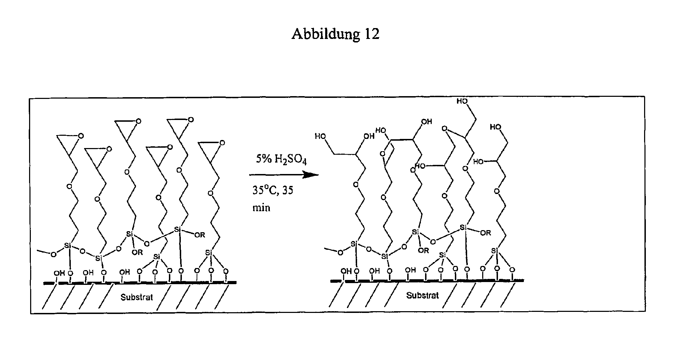

Abbildung 12: Reaktionsschema zur Modifizierung einer auf dem Träger angebrachten 1-Hydroxypropyl-(2'-hydroxy)-oxypropylsilan-Schicht durch Zugabe von Säure.

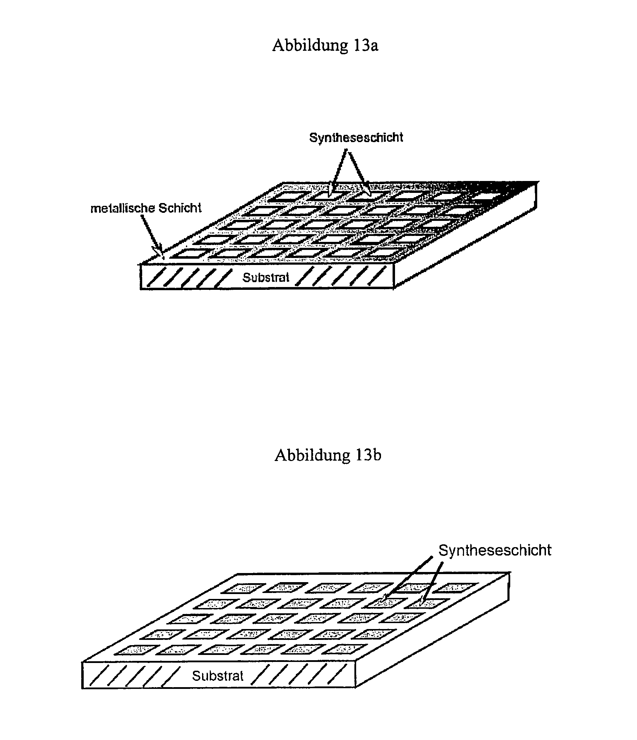

Abbildung 13a: Schematische Darstellung einer metallisch strukturierten Oberfläche. Die weißen Spots symbolisieren die Polymerschicht bzw. Syntheseschicht.

Abbildung 13b: Schematische Darstellung einer mit Sauerstoffplasma strukturierten Oberfläche. Die grauen Felder symbolisieren die Polymerschicht bzw. Syntheseschicht.

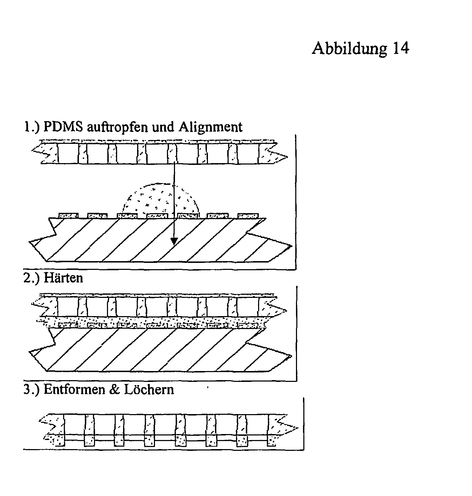

Abbildung 14: Schematische Darstellung der Erzeugung einer Maske.

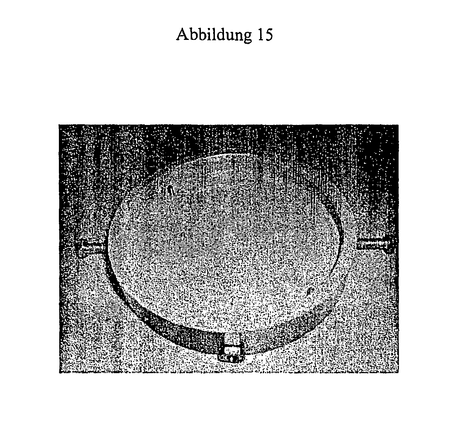

Abbildung 15: Photo der Reaktionskammer.

Abbildung 16: Hybridisierung mit 10 nM Oligotarget gemäß Beispiel 3.

Abbildung 17: Hybridisierung mit ca. 5 nM PCR-Target gemäß Beispiel 3.

Abbildung 18: Signal der Hybridisierung mit dem Oligonukleotid-Target in Abhängigkeit von der Anzahl der T-Kopplungsschritte, die vor der Synthese der zum Oligonukleotid komplementären Sequenz erfolgten (siehe Beispiel 3).

Die hellen Balken (Match) entsprechen dem an Sonden gemessenen Signal, deren spezifischer Bereich vollständige Komplementarität zum Hybridisierungstarget aufweist. Die dunklen Balken (Mismatch) zeigen das Signal, welches an Sonden gemessen wurde, deren spezifischer Bereich eine Deletion von einer Base aufwies.

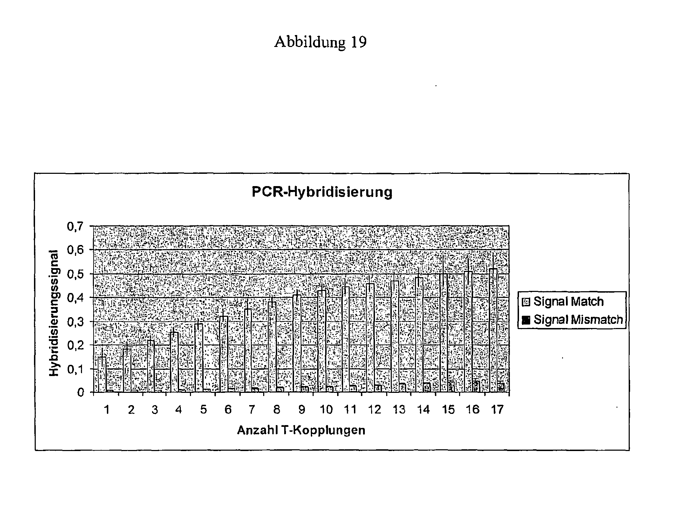

Abbildung 19: Signal der Hybridisierung mit dem PCR-Target in Abhängigkeit von der Anzahl der T-Kopplungsschritte, die vor der Synthese der zum Oligonukleotid komplementären Sequenz erfolgten (siehe Beispiel 3).

Die hellen Balken (Match) entsprechen dem an Sonden gemessenen Signal, deren spezifischer Bereich vollständige Komplementarität zur Zielregion im Hybridisierungstarget aufweist. Die dunklen Balken (Mismatch) zeigen das Signal, welches an Sonden gemessen wurde, deren spezifischer Bereich eine Deletion von einer Base aufwies.

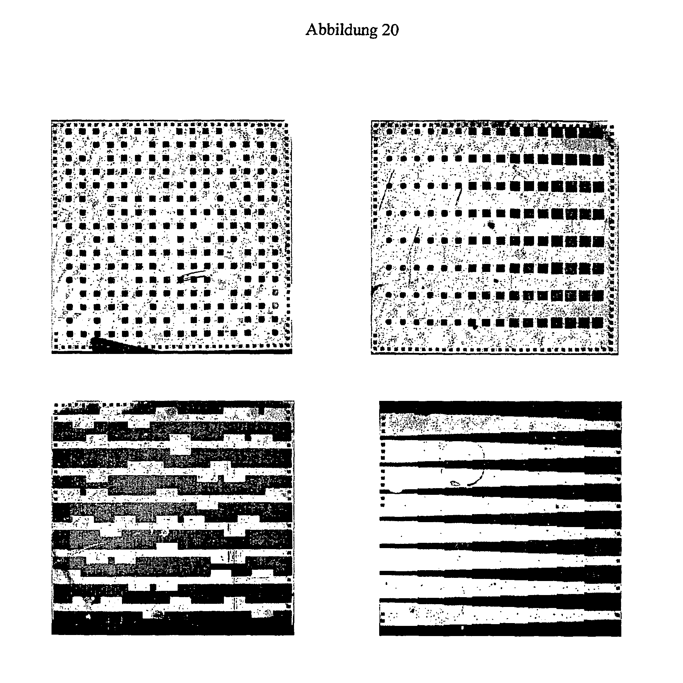

Abbildung 20: Verschiedene Maskengeometrien im Vergleich.

## Patentansprüche

1. Verfahren zur ortspezifischen Synthese von Biopolymeren einer definierten Sequenz auf vorbestimmten Bereichen eines festen Trägers, wobei auf dem Träger reaktive und mit temporären Schutzgruppen versehene Gruppen für die Kupplung von Monomer-und/oder Oligomerbausteinen der zu synthetisierenden Biopolymere vorliegen, umfassend die folgenden Schritte:
(a) Anordnen einer Maske auf dem Träger,
(b) Aktivieren der reaktiven Gruppen durch Entfernen der temporären Schutzgruppen an den durch die Maske vorgegebenen Bereichen mittels Zugabe eines Aktivierungsreagenzes in wässriger Lösung;
(c) Kupplung eines Monomer- und/oder Oligomerbausteins an die in Schritt (b) aktivierten reaktiven Gruppen; und
(d) Wiederholen der Schritte (a) bis (c), bis die gewünschten Biopolymere auf vorbestimmten Bereichen des Trägers synthetisiert sind.

2. Verfahren nach Anspruch 1, wobei die Maske vor Durchführung eines Kupplungsschritts von dem Träger getrennt wird.

3. Verfahren nach Anspruch 1 oder 2, wobei die Biopolymere ausgewählt werden aus Nukleinsäuren, Peptiden und Peptidnukleinsäuren.

4. Verfahren nach einem der Ansprüche 1 bis 3, wobei die temporären Schutzgruppen ausgewählt werden aus Dimethyloxytrityl, tert-Butyloxycarbonyl und/oder Fluorenyl-9-methoxycarbonyl.

5. Verfahren nach einem der Ansprüche 1 bis 4, wobei das Aktivierungsreagenz ein Entschützungsreagenz ist.

6. Verfahren nach Anspruch 5, wobei das Entschützungsreagenz ausgewählt wird aus Oxalsäure, Methansulfonsäure, Trifluoressigsäure, Salzsäure und/oder Natriumhydroxid.

7. Verfahren nach einem der Ansprüche 1 bis 6, wobei der Träger ausgewählt wird aus Silizium, Siliziumdioxid, Glas und/oder Keramik.

8. Verfahren nach einem der Ansprüche 1 bis 7, wobei eine auf dem Träger angeordnete Maske durch Adhäsion auf dem Träger haftet.

9. Verfahren nach einem der Ansprüche 1 bis 8, wobei die Maske zumindest auf der den Träger kontaktierenden Seite Elastomere umfasst.

10. Verfahren nach Anspruch 9, wobei das Elastomer Polydimethylsiloxan ist.

11. Verfahren nach einem der Ansprüche 1 bis 10, wobei die vorbestimmten Bereiche durch für die Synthese von Biopolymeren inerte Bereiche voneinander abgetrennt sind.

12. Verfahren nach einem der Ansprüche 1 bis 11, wobei der Träger Markierungen für die Anordnung einer Maske auf dem Träger aufweist.

13. Verfahren nach einem der Ansprüche 1 bis 12, wobei der Träger 50 bis 65.000 vorbestimmte Bereiche umfasst.

14. Verfahren nach einem der Ansprüche 1 bis 13, wobei sich auf unterschiedlichen vorbestimmten Bereichen synthetisierte Biopolymere in ihrer Sequenz unterscheiden.

15. Verfahren nach einem der Ansprüche 1 bis 14, wobei die Fläche des Trägers 100 µm² bis 1 cm² und vorzugsweise 3 mm² bis 25 mm² beträgt.

16. Verfahren nach einem der Ansprüche 1 bis 15, wobei die Sequenzen der Biopolymere entsprechend ihrer Eignung als molekulare Sonden in Mikroarray-Experimenten ausgewählt werden.

## Claims

1. Method for site-specific synthesis of biopolymers having a defined sequence on predetermined regions of a solid support, wherein reactive groups provided with temporary protecting groups for coupling of monomeric and/or oligomeric building blocks of the biopolymers to be synthesized are present on the support, comprising the following steps:
(a) placing a mask on the support,
(b) activating the reactive groups by removing the temporary protecting groups in those regions which are predetermined by the mask by adding an activating reagent in aqueous solution;
(c) coupling of a monomeric and/or oligomeric building block to the reactive groups activated in step (b); and
(d) repeating steps (a) to (c) until the desired biopolymers are synthesized on predetermined regions of the support.

2. Method according to claim 1,
wherein the mask is separated from the support prior to conducting a coupling step.

3. Method according to claim 1 or 2,
wherein the biopolymers are selected from nucleic acids, peptides and peptide nucleic acids.

4. Method according to any one of claims 1 to 3, wherein the temporary protecting groups are selected from dimethoxytrityl, tert-butyloxycarbonyl and/or fluorenyl-9-methoxycarbonyl.

5. Method according to any one of claims 1 to 4,
wherein the activating reagent is a deprotecting reagent.

6. Method according to claim 5,
wherein the deprotecting reagent is selected from oxalic acid, methanesulfonic acid, trifluoroacetic acid, hydrochloric acid and/or sodium hydroxide.

7. Method according to any one of claims 1 to 6,
wherein the support is selected from silicon, silica, glass and/or ceramics.

8. Method according to any one of claims 1 to 7,
wherein a mask arranged on the support adheres to the support by adhesion.

9. Method according to any one of claims 1 to 8,
wherein the mask comprises elastomers at least on the side contacting the support.

10. Method according to claim 9,
wherein the elastomer is polydimethylsiloxane.

11. Method according to any one of claims 1 to 10,
wherein the predetermined regions are separated from each other by regions that are inert to the synthesis of biopolymers.

12. Method according to any one of claims 1 to 11,
wherein the support has markings for arranging a mask on the support.

13. Method according to any one of claims 1 to 12,
wherein the support comprises 50 to 65,000 predetermined regions.

14. Method according to any one of claims 1 to 13,
wherein biopolymers synthesized in different predetermined regions differ in their sequence.

15. Method according to any of the claims 1 to 14,
wherein the surface of the support is 100 µm² to 1 cm² and preferably 3 mm² to 25 mm².

16. Method according to any one of claims 1 to 15,
wherein the sequences of the biopolymers are selected according to their suitability as molecular probes in microarray experiments.

## Revendications

1. Procédé de synthèse à spécificité de site de biopolymères d'une séquence définie sur des zones prédéterminées d'un support fixe, des groupes réactifs et pourvus de groupes protecteurs temporaires étant présents sur le support pour la liaison de modules de monomères et/ou d'oligomères des biopolymères à synthétiser, comportant les étapes suivantes :
(a) disposition d'un masque sur le support ;
(b) activation des groupes réactifs par enlèvement des groupes protecteurs temporaires au niveau des zones prédéterminées par le masque moyennant l'ajout d'un réactif d'activation en solution aqueuse ;
(c) liaison d'un module de monomères et/ou d'oligomères aux groupes réactifs activés à l'étape (b) ; et
(d) répétition des étapes (a) à (c) jusqu'à ce que les biopolymères souhaités soient synthétisés sur des zones prédéterminées du support.

2. Procédé selon la revendication 1, le masque étant séparé du support avant l'exécution d'une étape de liaison.

3. Procédé selon la revendication 1 ou 2, les biopolymères étant sélectionnés parmi les acides nucléiques, les peptides et les acides nucléiques peptidiques.

4. Procédé selon l'une des revendications 1 à 3, les groupes protecteurs temporaires étant sélectionnés parmi le diméthyloxytrityle, le *tert-*butyloxycarbonyle et/ou le fluorényl-9-méthoxycarbonyle.

5. Procédé selon l'une des revendications 1 à 4, le réactif d'activation étant un réactif de déprotection.

6. Procédé selon la revendication 5, le réactif de déprotection étant sélectionné parmi l'acide oxalique, l'acide méthanesulfonique, l'acide trifluoracétique, l'acide chlorhydrique et/ou l'hydroxyde de sodium.

7. Procédé selon l'une des revendications 1 à 6, le support étant sélectionné parmi le silicium, le dioxyde de silicium, le verre et/ou la céramique.

8. Procédé selon l'une des revendications 1 à 7, un masque disposé sur le support tenant au support par adhésion.

9. Procédé selon l'une des revendications 1 à 8, le masque comportant des élastomères, du moins du côté qui entre en contact avec le support.

10. Procédé selon la revendication 9, l'élastomère étant du polydiméthylsiloxane.

11. Procédé selon l'une des revendications 1 à 10, les zones prédéterminées étant séparées les unes des autres par des zones inertes pour la synthèse de biopolymères.

12. Procédé selon l'une des revendications 1 à 11, le support présentant des marquages pour la disposition d'un masque sur le support.

13. Procédé selon l'une des revendications 1 à 12, le support comportant 50 à 65 000 zones prédéterminées.

14. Procédé selon l'une des revendications 1 à 13, des biopolymères synthétisés sur différentes zones prédéterminées différant par leur séquence.

15. Procédé selon l'une des revendications 1 à 14, la surface du support étant de 100 µm² à 1 cm² et de préférence de 3 mm² à 25 mrn².

16. Procédé selon l'une des revendications 1 à 15, les séquences de biopolymères étant sélectionnées en fonction de leur aptitude en tant que sondes moléculaires dans des expériences de micromatrices.
